# EUROPEAN PATENT APPLICATION

(11) **EP 4 580 170 A1**
(43) Date of publication of application: **02.07.2025**
(21) Application number: 23860945.7
(22) Date of filing: 01.09.2023
(51) Int. Cl.: H04M 1/72454, H04M 1/02, G06F 3/041, G06F 3/04845, G06F 3/0481, G06F 1/16

(54) **ELECTRONIC DEVICE COMPRISING SLIDEABLE DISPLAY AND METHOD FOR OPERATING SAME**

(30) Priority: 01.09.2022 KR 20220110439; 07.10.2022 KR 20220129011
(71) Applicant: Samsung Electronics Co., Ltd., Suwon-si, Gyeonggi-do 16677 (KR)
(72) Inventor: WOO, Kwangtaek, Suwon-si, Gyeonggi-do 16677 (KR); CHOI, Jaeho, Suwon-si, Gyeonggi-do 16677 (KR); KIM, Mingyu, Suwon-si, Gyeonggi-do 16677 (KR); KIM, Seonghun, Suwon-si, Gyeonggi-do 16677 (KR); AN, Jinwan, Suwon-si, Gyeonggi-do 16677 (KR)
(74) Representative: HGF
(86) International application number: PCT/KR2023/013091
(87) International publication number: WO 2024/049270

(57) **Abstract**

An electronic device according to one embodiment may comprise a slideable display and a processor. The processor according to one embodiment can be configured to display a screen including content on the slideable display. The processor according to one embodiment can be configured to confirm an event in which the slideable display automatically expands or contracts by a specified size, wherein the specified size can be determined on the basis of the event. The processor according to one embodiment can be configured to display an object on the slideable display on the basis of the event to indicate the progress of expansion or contraction of the slideable display, wherein the size of the object can be determined on the basis of the specified size. The processor according to one embodiment can be configured to apply a visual effect indicating the progress to the object while expanding or contracting the slideable display by the specified size.

## Description

### [Technical Field]

Various embodiments of the present invention relate to an electronic device including a slidable display and a method for operating the same.

### [Background Art]

More and more services and additional functions are being provided through electronic devices, e.g., smartphones, or other portable electronic devices. To meet the needs of various users and raise use efficiency of electronic devices, communication service carriers or device manufacturers are jumping into competitions to develop electronic devices with differentiated and diversified functionalities. Accordingly, various functions that are provided through electronic devices are evolving more and more.

As the demand for mobile communication increases, and the degree of integration of electronic devices increases, the portability of electronic devices such as smartphones may be increased, and better convenience may be provided in use of multimedia functions. Use of an electronic device with a larger screen may give more convenience to the user in web browsing or multimedia playing. A larger display may be adopted to output a larger screen. However, this way may be limited by the portability of the electronic device. For example, a display using organic light emitting diodes may secure the portability of the electronic device while providing a larger screen. A display using, or equipped with, organic light emitting diodes may implement a stable operation even if it is made quite thin, so that the display may be applied to an electronic device in a foldable, bendable or rollable form.

### [Detailed Description of the Invention]

### [Technical Solution]

According to an embodiment, an electronic device may comprise a slidable display and a processor. According to an embodiment, the processor may be configured to display a screen including content on the slidable display. According to an embodiment, the processor may be configured to identify an event for automatically extending or contracting the slidable display by a designated size. The designated size may be determined based on the event. According to an embodiment, the processor may be configured to display an object for indicating a progress degree of extending or contracting the slidable display on the slidable display based on the event. The size of the object may be determined based on the designated size. According to an embodiment, the processor may be configured to apply a visual effect indicating the progress degree to the object while extending or contracting the slidable display by the designated size.

According to an embodiment, a method for operating an electronic device may comprise displaying a screen including content on a slidable display included in the electronic device. According to an embodiment, the method for operating the electronic device may comprise identifying an event for automatically extending or contracting the slidable display by a designated size. The designated size may be determined based on the event. According to an embodiment, the method for operating the electronic device may comprise displaying an object for indicating a progress degree of extending or contracting the slidable display on the slidable display based on the event. The size of the object may be determined based on the designated size. According to an embodiment, the method for operating the electronic device may comprise applying a visual effect indicating the progress degree to the object while extending or contracting the slidable display by the designated size.

According to an embodiment, a non-transitory recording medium may store instructions capable of executing displaying a screen including content on a slidable display included in an electronic device, identifying an event for automatically extending or contracting the slidable display by a designated size, the designated size being determined based on the event, displaying an object for indicating a progress degree of extending or contracting the slidable display on the slidable display based on the event, the size of the object being determined based on the designated size, and applying a visual effect indicating the progress degree to the object while extending or contracting the slidable display by the designated size.

### [Brief Description of the Drawings]

FIG. 1 is a view illustrating an electronic device according to various embodiments of the disclosure, wherein a portion of a flexible display is received in a second structure;
FIG. 2 is a view illustrating an electronic device according to an embodiment, wherein most of a flexible display is exposed to the outside of a second structure;
FIG. 3 is an exploded perspective view illustrating an electronic device according to an embodiment;
FIG. 4A is a bottom view illustrating an example in which a flexible display of an electronic device is mounted, according to various embodiments of the disclosure;
FIG. 4B is a view illustrating electronic devices including two types of flexible displays according to various embodiments;
FIG. 5 is a block diagram schematically illustrating a configuration of an electronic device according to an embodiment;
FIG. 6A is a flowchart illustrating a method for displaying an object indicating a progress degree of extending or contracting a slidable display by an electronic device according to an embodiment;
FIG. 6B is a flowchart illustrating a method for determining a shape of an object according to a progress direction of extending or contracting a slidable display by an electronic device according to an embodiment;
FIGS. 7A, 7B, 7C, and 7D are views illustrating a method for displaying an object indicating a progress degree of extending or contracting a slidable display by an electronic device according to an embodiment;
FIG. 8 is a flowchart illustrating a method for determining a size of an object based on an event by an electronic device according to an embodiment;
FIGS. 9A and 9B are views illustrating a method for determining a size of an object based on an event by an electronic device according to an embodiment;
FIG. 10 is a flowchart illustrating a method for adjusting a length of an object according to a progress degree of extending or contracting a slidable display by an electronic device according to an embodiment;
FIGS. 11A and 11B are views illustrating a method for adjusting a length of an object according to a progress degree of extending or contracting a slidable display by an electronic device according to an embodiment;
FIG. 12 is a view illustrating a method for adjusting a length of an object in a border shape according to a progress degree of extending or contracting a slidable display by an electronic device according to an embodiment;
FIG. 13 is a flowchart illustrating a method for applying a visual effect on a screen displayed on a slidable display according to a progress degree of extending or contracting the slidable display by an electronic device according to an embodiment;
FIGS. 14A and 14B are views illustrating a method for applying a visual effect on a screen displayed on a slidable display according to a progress degree of extending or contracting the slidable display by an electronic device according to an embodiment;
FIGS. 15A and 15B are views illustrating a method for displaying an object indicating a progress degree of extending or contracting a slidable display based on an event by an electronic device according to an embodiment; and
FIG. 16 is a view illustrating an electronic device in a network environment according to various embodiments.

### [Mode for Carrying out the Invention]

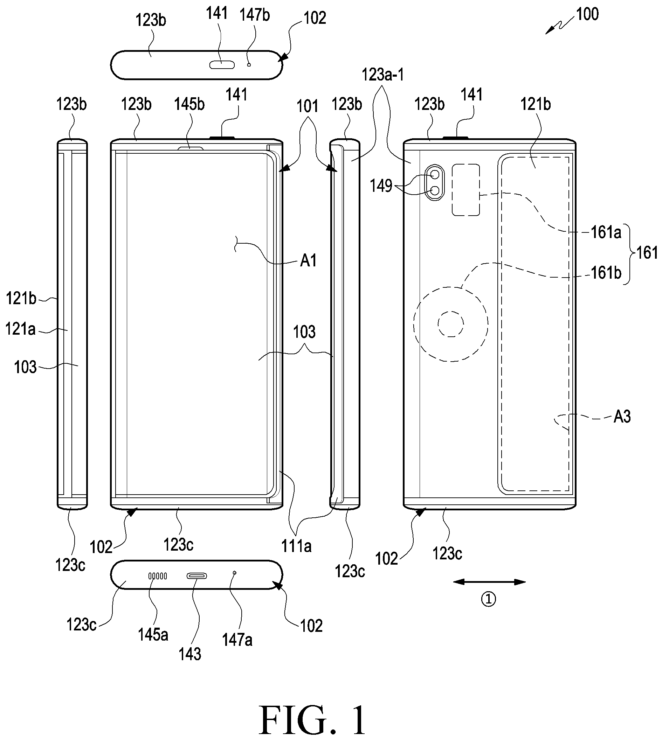

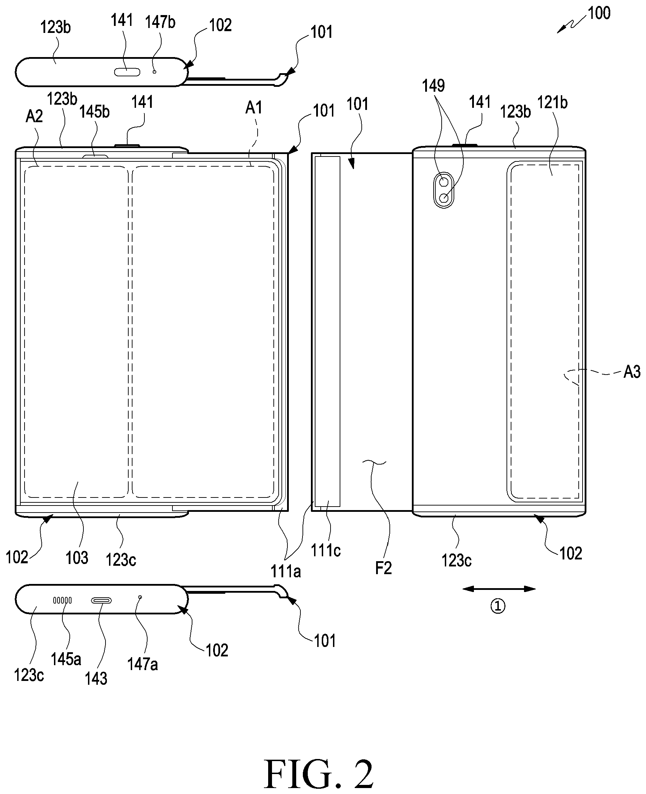

FIG. 1 is a view illustrating an electronic device 100 according to an embodiment, wherein a portion (e.g., the second area A2) of a flexible display 103 is received in a second structure 102. FIG. 2 is a view illustrating an electronic device 100 according to an embodiment, wherein most of a flexible display 103 is exposed to the outside of a second structure 102.

The state shown in FIG. 1 may be defined as a first structure 101 being closed with respect to a second structure 102, and the state shown in FIG. 2 may be defined as the first structure 101 being open with respect to the second structure 102. According to an embodiment, the "closed state" or "opened state" may be defined as a closed or opened state of the electronic device. The electronic device 100 may include a first structure 101 and a second structure 102 movably disposed in the first structure 101. According to an embodiment, the electronic device 100 may be interpreted as having a structure in which the first structure 101 is slidably disposed on the second structure 102. According to an embodiment, the first structure 101 may be disposed to perform reciprocating motion between the closed state and the opened state in the shown direction with respect to the second structure 102, for example, a direction indicated by an arrow ①.

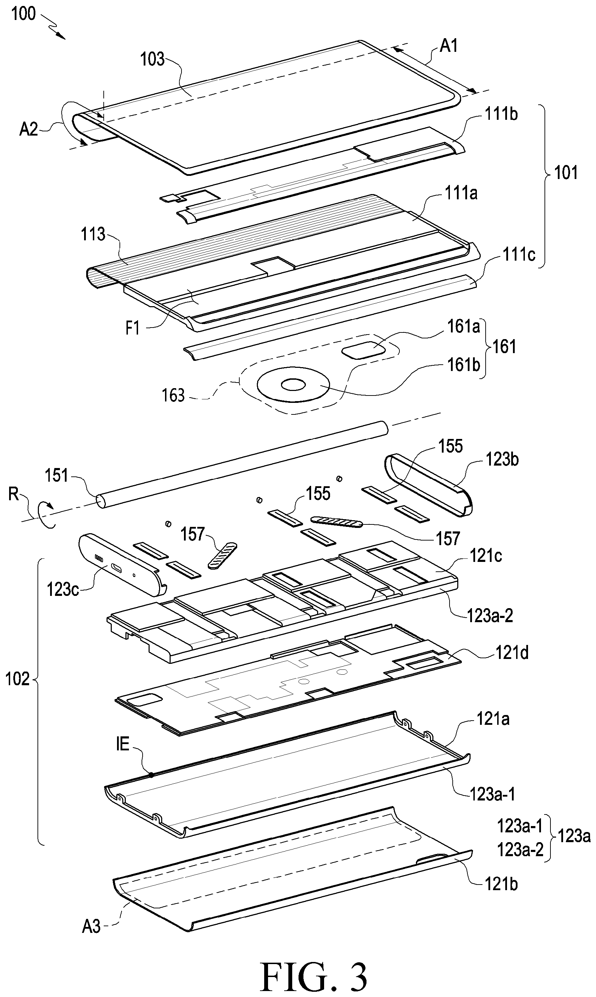

According to various embodiments, the first structure 101 may include a first plate 111a (e.g., a slide plate) and may include a first surface F1 (refer to FIG. 3) formed with at least a portion of the first plate 111a and a second surface F2 facing in a direction opposite to the first surface F1. According to an embodiment, the second structure 102 may include a second plate 121a (see FIG. 3) (e.g., a rear case), a first sidewall 123a extending from the second plate 121a, a second sidewall 123b extending from the first sidewall 123a and the second plate 121a, a third sidewall 123c extending from the first sidewall 123a and the second plate 121a and parallel to the second sidewall 123b, and/or a rear plate 121b (e.g., a rear window). According to an embodiment, the second sidewall 123b and the third sidewall 123c may be formed to be perpendicular to the first sidewall 123a. According to an embodiment, the second plate 121a, the first sidewall 123a, the second sidewall 123b, and the third sidewall 123c may be formed to have an opening (e.g., in the front face) to receive (or surround) at least a portion of the first structure 101. For example, the first structure 101 may be coupled to the second structure 102 in a state in which it is at least partially surrounded, and the first structure 101 may be slide in a direction parallel to the first surface F1 or the second surface F2, for example, direction ① indicated with the arrow.

According to an embodiment, the second sidewall 123b or the third sidewall 123c may be omitted. According to an embodiment, the second plate 121a, the first sidewall 123a, the second sidewall 123b, and/or the third sidewall 123c may be formed as separate structures and may be combined or assembled. The rear plate 121b may be coupled to surround at least a portion of the second plate 121a. In some embodiments, the rear plate 121b may be formed substantially integrally with the second plate 121a. According to an embodiment, the second plate 121a or the rear plate 121b may cover at least a portion of the flexible display 103. For example, the flexible display 103 may be at least partially received inside the second structure 102, and the second plate 121a or the rear plate 121b may cover a portion (e.g., the second area A2) of the flexible display 103 received inside the second structure 102.

According to various embodiments, the first structure 101 may be moved in an open state or closed state with respect to the second structure 102 in a first direction (e.g., direction ①) parallel with the second plate 121a (e.g., the rear case) and the second side wall 123b to be positioned a first distance away from the first side wall 123a in the closed state and be positioned a second distance away from the first side wall 123a in the open state, wherein the second distance is larger than the first distance. In some embodiments, when in the closed state, the first structure 101 may be positioned to surround a portion of the first sidewall 123a.

According to various embodiments, the electronic device 100 may include a display 103, a key input device 141, a connector hole 143, audio modules 145a, 145b, 147a, and 147b, or a camera module 149. Although not shown, the electronic device 100 may further include an indicator (e.g., a light emitting diode (LED) device) or various sensor modules.

According to various embodiments, the display 103 may include a first area A1 and a second area A2. In an embodiment, the first area A1 may extend substantially across at least a portion of the first surface F1 and may be disposed on the first surface F1. The second area A2 may extend from the first area A1 and be inserted or received into, or exposed to the outside of, the second structure 102 (e.g., the housing) according to the slide of the first structure 101. As will be described below, the second area A2 may be moved while being substantially guided by a roller 151 (refer to FIG. 3) mounted on the second structure 102 and may thus be received into the inside of or exposed to the outside of the second structure 102. For example, while the first structure 101 slides, a portion of the second area A2 may be deformed into a curved shape in a position corresponding to the roller 151.

According to various embodiments, when viewed from the top of the first plate 111a (e.g., slide plate), when the first structure 101 moves from the closed state to the opened state, the second area A2 may be gradually exposed to the outside of the second structure 102 to be substantially coplanar with the first area A1. The display 103 may be disposed to be coupled with, or adjacent, a touch detecting circuit, a pressure sensor capable of measuring the strength (pressure) of touches, and/or a digitizer for detecting a magnetic field-type stylus pen. In an embodiment, the second area A2 may be at least partially received inside the second structure 102, and a portion of the second area A2 may be exposed to the outside even in the state shown in FIG. 1 (e.g., the closed state). In some embodiments, irrespective of the closed state or the opened state, the exposed portion of the second area A2 may be positioned on the roller 151 and, in a position corresponding to the roller 151, a portion of the second area A2 may maintain the curved shape.

The key input device 141 may be disposed on the second sidewall 123b or the third sidewall 123c of the second structure 102. Considering the appearance and the state of use, the electronic device 100 may be manufactured to omit the illustrated key input device 141 or to include additional key input device(s). According to an embodiment, the electronic device 100 may include a key input device (not shown), e.g., a home key button or a touchpad disposed around the home key button. According to another embodiment, at least a portion of the key input device 141 may be positioned on an area of the first structure 101.

According to various embodiments, the connector hole 143 may be omitted or may receive a connector (e.g., a universal serial bus (USB) connector) for transmitting and receiving power and/or data with an external electronic device. Although not shown, the electronic device 100 may include a plurality of connector holes 143, and some of the plurality of connector holes 143 may function as connector holes for transmitting/receiving audio signals with an external electronic device. It should be noted that in the illustrated embodiment, the connector hole 143 is disposed in the third sidewall 123c, but the present invention is not limited thereto. For example, the connector hole 143 or an additional connector hole not shown may be disposed in the first sidewall 123a or the second sidewall 123b.

According to various embodiments, the audio modules 145a, 145b, 147a, and 147b may include speaker holes 145a and 145b or microphone holes 147a and 147b. One of the speaker holes 145a and 145b may be provided as a receiver hole for voice calls, and the other may be provided as an external speaker hole. The microphone holes 147a and 147b may have a microphone inside to obtain external sounds. According to an embodiment, there may be a plurality of microphones to be able to detect the direction of a sound. In some embodiments, the speaker holes 145a and 145b and the microphone holes 147a and 147b may be implemented as one hole, or a speaker may be included without the speaker holes 145a and 145b (e.g., a piezo speaker). According to, the speaker hole indicated by the reference number "145b" may be disposed in the first structure 101 and used as a receiver hole for voice calls, and the speaker hole indicated by the reference number "145a" (e.g., an external speaker hole) or the microphone holes 147a and 147b may be disposed in the second structure 102 (e.g., one of the side surfaces 123a, 123b, and 123c).

The camera module 149 may be provided on the second structure 102 and may capture a subject in a direction opposite to the first area A1 of the display 103. The electronic device 100 may include a plurality of camera modules 149. For example, the electronic device 100 may include a wide-angle camera, a telephoto camera, or a close-up camera, and according to an embodiment, by including an infrared projector and/or an infrared receiver, the electronic device 600 may measure the distance to the subject. The camera module 149 may include one or more lenses, an image sensor, and/or an image signal processor. Although not shown, the electronic device 100 may further include a camera module (e.g., a front camera) that captures the subject in the same direction as the first area A1 of the display 103. For example, the front camera may be disposed around the first area A1 or in an area overlapping the display 103 and, when disposed in the area overlapping the display 103, the front camera may capture the subject via the display 103.

According to various embodiments, an indicator (not shown) of the electronic device 100 may be disposed on the first structure 101 or the second structure 102, and the indicator may include a light emitting diode to provide state information about the electronic device 100 as a visual signal. The sensor module (not shown) of the electronic device 100 may produce an electrical signal or data value corresponding to the internal operation state or external environment state of the electronic device. The sensor module may include, for example, a proximity sensor, a fingerprint sensor, or a biometric sensor (e.g., an iris/face recognition sensor or a heartrate monitor (HRM) sensor). According to another embodiment, the sensor module may further include, e.g., at least one of a gesture sensor, a gyro sensor, an atmospheric pressure sensor, a magnetic sensor, an acceleration sensor, a grip sensor, a color sensor, an infrared (IR) sensor, a temperature sensor, a humidity sensor, or an illuminance sensor.

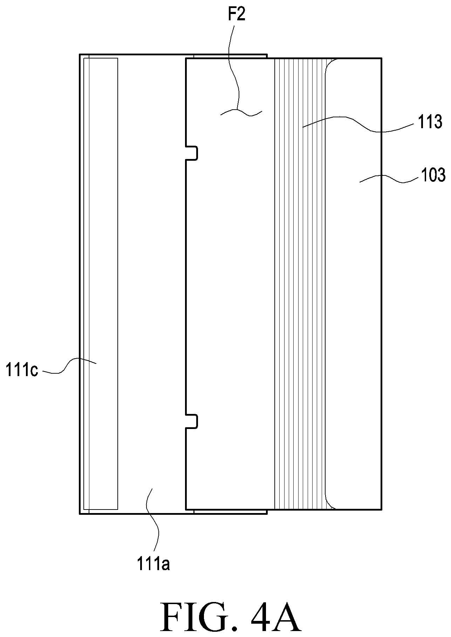

FIG. 3 is an exploded perspective view illustrating an electronic device (e.g., the electronic device 100 of FIG. 1 or 2) according to various embodiments of the disclosure. FIG. 4A is a bottom view illustrating a state in which a flexible display 103 of an electronic device (e.g., the electronic device 100 of FIGS. 1 to 3) is mounted according to various embodiments of the disclosure.

Referring to FIGS. 3 and 4A, the electronic device 100 may include a first structure 101, a second structure 102 (e.g., a housing), a display 103 (e.g., a flexible display), a guide member (e.g., the roller 151), an articulated hinge structure 113, and/or at least one antenna structure 161. A portion (e.g., the second area A2) of the display 103 may be received in the second structure 102 while being guided by the roller 151.

According to various embodiments, the first structure 101 may include a first plate 111a (e.g., a slide plate), a first bracket 111b and/or a second bracket 111c mounted on the first plate 111a. The first structure 101, for example, the first plate 111a, the first bracket 111b, and/or the second bracket 111c may be formed of a metallic material and/or a non-metallic (e.g., polymer) material. The first plate 111a may be mounted on the second structure 102 (e.g., the housing) and may be linearly reciprocated in one direction (e.g., in the direction ① indicated with the arrow in FIG. 1) while being guided by the second structure 102. In one embodiment, the first bracket 111b may be coupled to the first plate 111a to, together with the first plate 111a, form the first surface F1 of the first structure 101. The first area A1 of the display 103 may be substantially mounted on the first surface F1 and remain in a flat plate shape. The second bracket 111c may be coupled to the first plate 111a to, together with the first plate 111a, form the second surface F2 of the first structure 101. According to an embodiment, the first bracket 111b and/or the second bracket 111c may be integrally formed with the first plate 111a. This may be appropriately designed in consideration of the assembly structure or manufacturing process of the product to be manufactured. The first structure 101 or the first plate 111a may be coupled with the second structure 102 and slide with respect to the second structure 102.

According to various embodiments, the articulated hinge structure 113 may include a plurality of rods extending in a straight line and disposed parallel to the rotation axis R of the roller 151. The plurality of rods may be arranged along a direction perpendicular to the rotation axis R, e.g., along a direction in which the first structure 101 slides. In an embodiment, the articulated hinge structure 113 is connected with one end of the first structure 101 to be able to move with respect to the second structure 102 according to the slide of the first structure 101. For example, in the closed state (e.g., the state illustrated in FIG. 1), the articulated hinge structure 113 may be substantially received into the inside of the second structure 102 and, in the opened state (e.g., the state illustrated in FIG. 2), the articulated hinge structure may be extracted to the outside of the second structure 102. In some embodiments, even in the closed state, a portion of the articulated hinge structure 113 may not be received inside the second structure 102. For example, even in the closed state, a portion of the articulated hinge structure 113 may be positioned to correspond to the roller 151 outside the second structure 102.

According to various embodiments, the rods of the articulated hinge structure 113 may orbit around other adjacent rods while remaining parallel to the other adjacent rods. Thus, as the first structure 101 slides, a portion of the articulated hinge structure 113, which faces the roller 151, may form a curved surface, and another portion of the articulated hinge structure 213, which does not face the roller 151, may form a flat surface. In one embodiment, the second area A2 of the display 103 may be mounted or supported on the articulated hinge structure 113 and, in the open state (e.g., the state shown in FIG. 2), the second area A2, along with the first area A1, may be exposed to the outside of the second structure 102. In the state in which the second area A2 is exposed to the outside of the second structure 102, the articulated hinge structure 113 may substantially form a flat surface, thereby supporting or maintaining the second area A2 in the flat state.

According to various embodiments, the second structure 102 (e.g., the housing) may include a second plate 121a (e.g., the rear case), a printed circuit board (not shown), a rear plate 121b, a third plate 121c (e.g., the front case), and a supporting member 121d. The second plate 121a, e.g., the rear case, may be disposed to face in a direction opposite to the first surface F1 of the first plate 111a, and the second plate 121a may substantially form the external shape of the second structure 102 or the electronic device 100. In one embodiment, the second structure 102 may include a first sidewall 123a extending from the second plate 121a, a second sidewall 123b extending from the second plate 121a and formed to be substantially perpendicular to the first sidewall 123a, and a third sidewall 123c extending from the second plate 121a, substantially perpendicular to the first sidewall 123a, and parallel to the second sidewall 123b. In the illustrated embodiment, the second sidewall 123b and the third sidewall 123c are manufactured as separate components from the second plate 121a and are mounted or assembled on the second plate 121a. However, the second sidewall 123b and the third sidewall 123c may alternatively be integrally formed with the second plate 121a.

According to various embodiments, the rear plate 121b may be coupled to the outer surface of the second plate 121a and, according to an embodiment, the rear plate 121b may be manufactured integrally with the second plate 121a. In one embodiment, the second plate 121a may be formed of a metal or polymer, and the rear plate 121b may be formed of a material such as metal, glass, synthetic resin, or ceramic to decorate the exterior of the electronic device 100. According to an embodiment, the second plate 121a and/or the rear plate 121b may be formed of a material that transmits light at least partially (e.g., the auxiliary display area A3). In an embodiment, in a state in which a portion (e.g., the second area A2) of the display 103 is received into the inside of the second structure 102, at least a portion of the second area A2 may be positioned corresponding to the auxiliary display area A3. For example, in a state of being received inside the second structure 102, the display 103 may output a screen using at least a portion of the second area A2, and the user may recognize the screen output through the auxiliary display area A3.

According to various embodiments, the third plate 121c may be formed of a metal or polymer, and the third plate 121c may be coupled with the second plate 121a (e.g., rear case), the first sidewall 123a, the second sidewall 123b, and/or the third sidewall 123c to form an internal space of the second structure 102. According to an embodiment, the third plate 121c may be referred to as a "front case", and the first structure 101, e.g., the first plate 111a, may be slid while substantially facing the third plate 121c. In some embodiments, the first sidewall 123a may be formed of a combination of a first sidewall portion 123a-1 extending from the second plate 121a and a second sidewall portion 123a-2 formed at an edge of the third plate 121c. According to an embodiment, the first sidewall portion 123a-1 may be coupled to surround an edge of the third plate 121c, e.g., the second sidewall portion 123a-2. In this case, the first sidewall portion 123a-1 itself may form the first sidewall 123a.

According to various embodiments, the support member 121d may be disposed in a space between the second plate 121a and the third plate 121c, and may have a flat plate shape formed of a metal or polymer. The support member 121d may provide an electromagnetic shielding structure in the internal space of the second structure 102 or may increase mechanical rigidity of the second structure 102. In one embodiment, when received into the inside of the second structure 102, a partial area (e.g., the second area A2) of the articulated hinge structure 113 and/or the display 103 may be positioned in a space between the second plate 121a and the support member 121d.

According to various embodiments, a printed circuit board (not shown) may be disposed in a space between the third plate 121c and the support member 121d. For example, the printed circuit board may be accommodated in a space separated by the support member 121d from the space in which a partial area of the multi-joint hinge structure 113 and/or the display 103 is accommodated inside the second structure 102. A processor, memory, and/or interface may be mounted on the printed circuit board. The processor may include one or more of, e.g., a central processing unit, an application processor, a graphic processing device, an image signal processing, a sensor hub processor, or a communication processor.

The memory may include, e.g., a volatile or non-volatile memory.

The interface may include, e.g., a high definition multimedia interface (HDMI), a universal serial bus (USB) interface, a secure digital (SD) card interface, and/or an audio interface. The interface may electrically or physically connect, e.g., the electronic device 100 with an external electronic device and may include a USB connector, an SD card/multimedia card (MMC) connector, or an audio connector.

According to various embodiments, the display 103 may be an organic light emitting diode-based flexible display, and the display 103 may normally remain in the flat shape and may be at least partially deformed into a curved shape. In one embodiment, the first area A1 of the display 103 may be mounted or attached to the first surface F1 of the first structure 101 and maintained in a substantially flat shape. The second area A2 may extend from the first area A1 and may be supported or attached to the multi-joint hinge structure 113. For example, the second area A2 may extend along the sliding direction of the first structure 101 and, along with the multi-joint hinge structure, may be accommodated in the second structure 102. As the multi-joint hinge structure 113 is deformed, the second area A2 may be at least partially deformed into a curved shape.

According to various embodiments, as the first structure 101 slides on the second structure 102, the area of the display 103 exposed to the outside may vary. The electronic device 100 (e.g., processor) may change the area of the display 103 that is activated based on the area of the display 103 that is exposed to the outside. For example, in the opened state or in an intermediate position between the closed state and the opened state, the electronic device 100 may activate a partial area exposed to the outside of the second structure 102 of the entire area of the display 103. In the closed state, the electronic device 100 may activate the first area A1 of the display 103 and deactivate the second area A2. In the closed state, when there is no user input for a certain period of time (e.g., 30 seconds or 2 minutes), the electronic device 100 may deactivate the entire area of the display 103. In an embodiment, in a state in which the entire area of the display 103 is inactivated, the electronic device 100 may activate a partial area of the display 103 to provide visual information, as necessary (e.g., a notification according to the user setting, a missed call/message arrival notification), through the auxiliary display area A3.

According to various embodiments, in the open state (e.g., the state shown in FIG. 2), the entire area (e.g., the first area A1 and the second area A2) of the display 103 may be substantially exposed to the outside, and the first area A1 and the second area A2 may be arranged to form a plane. In an embodiment, even in the opened state, a portion (e.g., one end) of the second area A2 may be positioned corresponding to the roller 151, and the portion of the second area A2, which corresponds to the roller 151 may remain in the curved shape. For example, according to various embodiments of the disclosure, despite the phrase "the second area A2 is disposed to form a plane in the opened state," a portion of the second area A2 may remain in the curved shape. Likewise, although it is stated that "in the closed state, the articulated hinge structure 113 and/or the second area A2 are received inside the second structure 102," a portion of the second area A2 of the articulated hinge structure 113 may be positioned outside the second structure 102.

According to an embodiment, the guide member, e.g., the roller 151, may be rotatably mounted on the second structure 102 in a position adjacent to an edge of the second structure 102 (e.g., the second plate 121a). For example, the roller 151 may be disposed adjacent to an edge (e.g., the portion indicated with reference denotation 'IE') of the second plate 121a parallel to the first side wall 123a. Although no reference denotation is assigned in the drawings, another sidewall may extend from the edge of the second plate 121a, and the sidewall adjacent to the roller 151 may be substantially parallel to the first sidewall 123a. According to an embodiment, the sidewall of the second structure 102 adjacent to the roller 151 may be formed of a material that transmits light, and a portion of the second area A2 may provide visual information via the portion of the second structure 102 while being received in the second structure 102.

According to various embodiments, an end of the roller 151 may be rotatably coupled to the second sidewall 123b, and the other end thereof may be rotatably coupled to the third sidewall 123c. For example, the roller 151 may be mounted on the second structure 102, rotating about the rotation axis R perpendicular to the sliding direction (e.g., direction ① indicated with the arrow in FIG. 1 or 2) of the first structure 101. The rotation axis R may be disposed substantially parallel to the first side wall 123a, and may be positioned away from the first side wall 123a, for example, at one edge of the second plate 121a. In one embodiment, the gap formed between the outer circumferential surface of the roller 151 and the inner surface of the edge of the second plate 121a may form an entrance through which the articulated hinge structure 113 or display 103 enters the second structure 102.

According to various embodiments, when the display 103 is deformed into a curved shape, the roller 151 maintains a radius of curvature of the display 103 to a certain degree, thereby suppressing excessive deformation of the display 103. The term "excessive deformation" may mean that the display 103 is deformed to have a radius of curvature that is too small to damage pixels or signal lines included in the flexible display 203. For example, the display 103 may be moved or deformed while being guided by the roller 151 and may be protected from damage due to excessive deformation. In some embodiments, the roller 151 may rotate while the articulated hinge structure 113 or the display 103 is inserted into or extracted from the second structure 102. For example, the friction between the articulated hinge structure 113 (or display 103) and the second structure 102 may be suppressed or prevented, allowing the articulated hinge structure 113 (or display 103) to smooth the insertion/extraction of the second structure 102.

According to various embodiments, the electronic device 100 may further include a guide rail(s) 155 and/or an actuating member(s) 157. The guide rail(s) 155 may be mounted on the second structure 102, e.g., the third plate 121c to guide a sliding of the first structure 101 (e.g., the first plate 111a or the slide plate). The actuating member(s) 157 may include a spring or a spring module that provides an elastic force in a direction along which two opposite ends thereof move away from each other, and a first end of the actuating member(s) 157 may be rotatably supported on the second structure 102, and a second end may be rotatably supported on the first structure 101.

According to various embodiments, when the first structure 101 slides, both the ends of the actuating member(s) 157 may be positioned closest to each other (hereinafter, a 'nearest point') at any one point between the closed state and the opened state. For example, in the interval between the nearest point and the closed state, the actuating member(s) 157 may provide an elastic force to the first structure 101 in a direction moving toward the closed state and, in the interval between the nearest point and the opened state, the actuating member(s) 157 may provide an elastic force to the first structure 101 in a direction moving toward the opened state.

According to various embodiments, the antenna structure 161 may be disposed on at least one of the first structure 101 or the second structure 102. The antenna structure 161 may include a loop antenna formed of an array of electrically conductive bodies, e.g., electrically conductive lines, on a flat surface or flat plate. In an embodiment, the antenna structure 161 may include a patch antenna, a monopole antenna, a dipole antenna, or an inverted F-antenna depending on the arrangement or shape of the conductive bodies. The antenna structure may be configured to perform at least one of, e.g., near field communication, wireless power transmission/reception, and magnetic secure transmission. However, it should be noted that wireless communication through the antenna structure 161 is not limited thereto. For example, the electronic device 100 may access a mobile or cellular communication network, a local area network (LAN), a wireless local area network (WLAN), a wide area network (WAN), the Internet, or a small area network (SAN), using the antenna structure 161. According to an embodiment, the antenna structure 161 may include a first antenna 161a for magnetic secure transmission (MST) and/or near field communication and a second antenna 161b for near field communication and/or wireless power transmission. In an embodiment, the first antenna 161a may be configured to perform near field communication and/or wireless charging. The second antenna 161b may be utilized for magnetic secure transmission.

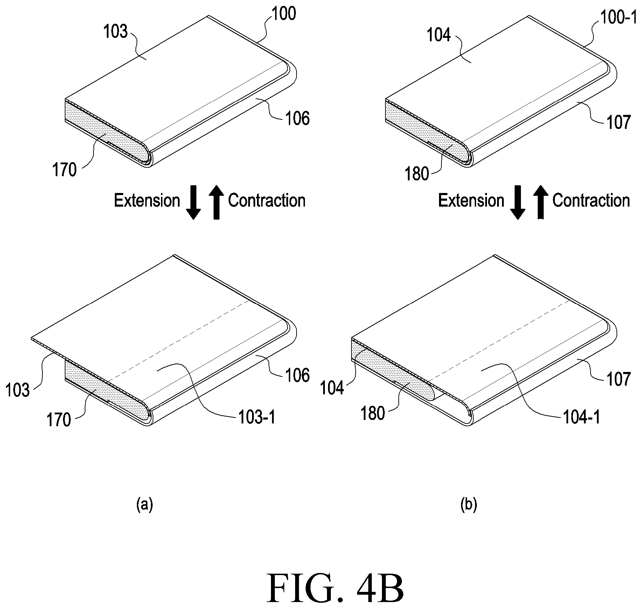

FIG. 4B is a view illustrating electronic devices including two types of flexible displays according to various embodiments.

Referring to FIG. 4B, electronic devices 100 and 100-1 including a flexible display may be implemented in various forms depending on a manner in which the form factor is extended or transformed. For example, the electronic devices 100 and 100-1 including a flexible display may include two types of devices.

According to various embodiments, referring to (a) of FIG. 4B, a first type (e.g., table type) of electronic device 100 may include a flexible display 103 and an electric object 170. In the electronic device 100, at least a portion of the housing may be covered by the glass (or back glass) 105.

For example, the flexible display 103 may include a slidable or rollable display. The electric object 170 may include various types of electronic circuits and/or circuit boards. In a state in which a specific surface of the electronic device 100 is fixed, only the flexible display 103 may be extended, shrunken, or changed. Alternatively, in a state in which a specific surface of the electronic device 100 is fixed, the flexible display 103 and a supporting portion for supporting the flexible display 103 may together be extended, shrunken, or changed. For example, if the flexible display 103 is extended while the specific surface of the electronic device 100 is fixed, the rolled portion 103-1 of the flexible display 103 may be exposed on the front surface.

According to various embodiments, referring to (b) of FIG. 4B, a second type (e.g., drawer type) of electronic device 100-1 may include a flexible display 104 and an electric object 180. In the electronic device 100, at least a portion of the housing may be covered by the glass (or back glass) 106. For example, the flexible display 104 may include a slidable or rollable display. The electric object 180 may include various types of electronic circuits and/or circuit boards. In a state in which a specific surface of the electronic device 100-1 is fixed, the flexible display 104, together with the electric object 180, may be extended, shrunken, or changed. For example, if the flexible display 104, together with the electric object 180, is extended while the specific surface of the electronic device 100 is fixed, the rolled portion 104-1 of the flexible display 104 may be exposed on the front surface.

Hereinafter, for convenience of description, various embodiments are described with reference to the second type of electronic device 100-1. However, the technical features of the present invention may not be limited thereto. For example, the technical features of the present invention may be equally applied to the first type of electronic device 100.

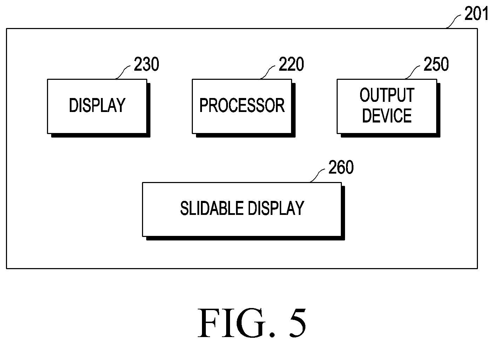

FIG. 5 is a block diagram schematically illustrating a configuration of an electronic device according to an embodiment.

Referring to FIG. 5, an electronic device 201 may include a processor 220, memory 230, an output device 250, and a slidable display 260.

According to an embodiment, the electronic device 201 may be implemented to be identical or similar to the electronic device 100 or 100-1. For example, the electronic device 201 may extend or contract the slidable display 260 according to either the first type or the second type of FIG. 4B.

According to an embodiment, the processor 220 may control the overall operation of the electronic device 201. The processor 220 may display a screen including content on the slidable display 260. For example, the content may be content stored in the memory 230. For example, the screen may include a home screen, an execution screen of an application, and a standby screen. For example, the screen may be displayed in the entire display area of the slidable display 260. Alternatively, the screen may be displayed only in a portion of the display area of the slidable display 260.

According to an embodiment, the processor 220 may identify an event in which the slidable display 260 automatically extends or contracts by a designated size. For example, the event may include a command to automatically extend or contract the slidable display 260 by the designated size in response to a user input. For example, a plurality of events in which the slidable display 260 automatically extends or contracts by the designated size may be designated. Each of the plurality of events may include a command to automatically extend or contract the slidable display 260 by the designated size. For example, the event may include a command to execute an application (or a specific function or specific content (e.g., image, video)) selected by a user input among a plurality of applications stored in the memory 230. Alternatively, the event may include a command to request a screen change to the home screen.

According to an embodiment, the processor 220 may identify the designated size corresponding to the event. For example, if the event is identified, the processor 220 may identify the designated size indicating how much the slidable display 260 is automatically extended or contracted based on the event.

According to an embodiment, the processor 220 may display an object for indicating the progress degree of extension or contraction of the slidable display 260 on the slidable display 260 based on the identified event. The processor 220 may determine the size of the object displayed on the slidable display 260 based on the designated size corresponding to the identified event. According to an embodiment, the processor 220 may determine the size of the object based on the size of the display area of the slidable display 260 when the extension or contraction of the slidable display 260 is completed. For example, as the size in which the slidable display 260 is enlarged increases, the size of the object may also increase. Alternatively, as the size in which the slidable display 260 is enlarged decreases, the size of the object may also decrease. According to the implementation, the processor 220 may display a contracted screen of the screen displayed on the slidable display 260 on the object.

According to an embodiment, the processor 220 may determine at least one of the shape or form of the object based on the direction of the extension or the contraction of the slidable display 260. For example, when the slidable display 260 is enlarged in the right direction (or left direction), the processor 220 may determine the shape or form of the object to indicate that it is enlarged in the right direction (or left direction). Alternatively, the processor 220 may determine the shape or form of the object to indicate that the slidable display 260 is enlarged in the upper direction (or in the lower direction) when it is enlarged in the upper direction (or in the lower direction).

According to an embodiment, the processor 220 may apply a visual effect indicating the progress degree of extension or contraction of the slidable display 260 to the object displayed on the slidable display 260 while extending or reducing the slidable display 260 by the size designated in the identified event. For example, the visual effect may include a specific color and/or blur effect displayed to overlap the object.

According to an embodiment, the processor 220 may apply a visual effect so that the color or blur effect corresponding to the progress degree of extension or contraction of the slidable display 260 overlaps the object. For example, the processor 220 may apply a visual effect so that as the slidable display 260 is extended or contracted, the area in which the color or blur effect is displayed on the object increases. Alternatively, the processor 220 may apply a visual effect so that as the extension or contraction of the slidable display 260 proceeds, the area in which the color or blur effect is displayed on the object decreases.

According to an embodiment, the processor 220 may adjust the brightness of the color or blur effect displayed on the object according to the progress degree of extension or contraction of the slidable display 260. For example, the processor 220 may increase or decrease the color or blur effect displayed on the object according to the progress degree of extension or contraction of the slidable display 260.

According to an embodiment, the processor 220 may display information about the remaining time until the extension or contraction is completed on the slidable display 260 based on the progress degree of the extension or contraction of the slidable display 260. For example, the processor 220 may display the remaining time based on the remaining size compared to the total size to be extended or contracted.

According to an embodiment, the processor 220 may display information indicating the progress rate for the extension or contraction on the slidable display 260 based on the progress degree of extension or contraction of the slidable display 260. For example, the processor 220 may display the remaining size compared to the total size to be extended or contracted, as a percentage (%).

According to an embodiment, the memory 230 may store content. According to an embodiment, the memory 230 may include a non-transitory recording medium capable of storing instructions that may be executed by the processor 220.

According to an embodiment, the output device 250 may output at least one of visual (e.g., light), auditory (e.g., sound), and tactile (e.g., vibration). For example, the processor 220 may output sound or vibration indicating the progress degree of extension or contraction of the slidable display 260 through the output device 250.

According to an embodiment, the slidable display 260 may be implemented as a display capable of extending or contracting through a sliding operation. For example, the slidable display 260 may be implemented as a rollable display. The slidable display 260 may extend or contract the size of the display area under the control of the processor 220. For example, the operation of extending the display area of the slidable display 260 may mean an operation of rolling out the slidable display 260. For example, the operation of contracting the display area of the slidable display 260 may mean an operation of rolling in the slidable display 260. The slidable display 260 may display a screen including content under the control of the processor 220. if the extension or contraction of the display area of the slidable display 260 is completed, the processor 220 may adjust the size of the screen according to the extended or contracted display area. Alternatively, the processor 220 may adjust the size of the screen to suit the extended or contracted display area in real-time while the display area of the slidable display 260 is extended or contracted.

At least some of the operations of the electronic device 201 described below may be performed by the processor 220. However, for convenience of description, it is described that the electronic device 201 performs corresponding operations.

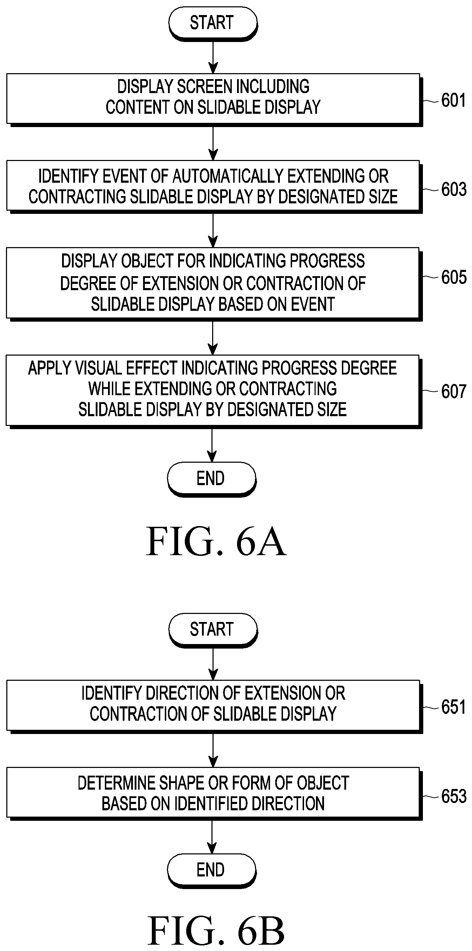

FIG. 6A is a flowchart illustrating a method for displaying an object indicating a progress degree of extending or contracting a slidable display by an electronic device according to an embodiment.

Referring to FIG. 6A, according to an embodiment, in operation 601, an electronic device (the electronic device 201 of FIG. 5) may display a screen including content on a slidable display (the slidable display 260 of FIG. 5).

According to an embodiment, in operation 603, the electronic device 201 may identify an event in which the slidable display 260 automatically extends or contracts by a designated size. For example, if an event requesting the execution of a specific application or a specific function is identified, the electronic device 201 may automatically extend or contract the slidable display 260 by the size designated in the event.

According to an embodiment, in operation 605, the electronic device 201 may display an object for indicating the progress degree of extension or contraction of the slidable display 260 on the slidable display 260 based on the event. For example, the electronic device 201 may display the object in a designated area of the display area of the slidable display 260. Alternatively, when the slidable display 260 is extended, the electronic device 201 may display the object in the display area of the extended slidable display 260.

According to an embodiment, in operation 607, the electronic device 201 may apply a visual effect indicating the progress degree of the extension or contraction to the object while extending or reducing the slidable display 260 by the designated size. The electronic device 201 may apply the visual effect to the object so as to correspond to the display area of the extended or contracted slidable display 260. For example, as the extension or contraction of the slidable display 260 proceeds, the area of the visual effect applied to the object may also be gradually extended or contracted. For example, the electronic device 201 may apply a visual effect indicating the progress degree of extension or contraction to the object displayed on the slidable display 260 until the extension or contraction of the slidable display 260 is completed. Through this, the electronic device 201 may inform the user of the progress degree (e.g., progress state and remaining time) of the extension or contraction of the slidable display 260.

According to an embodiment, the electronic device 201 may effectively provide information indicating the progress state of extension or contraction of the slidable display 260 by applying the visual effect indicating the progress degree of the object in real-time. Further, since the size of the object is determined based on the size of the display area when the slidable display 260 is extended or contracted by the designated size, the electronic device 201 may effectively provide the progress degree (e.g., progress state and/or progress time) of extension or contraction of the slidable display 260 by the event.

FIG. 6B is a flowchart illustrating a method for determining a shape of an object according to a progress direction of extending or contracting a slidable display by an electronic device according to an embodiment.

Referring to FIG. 6B, according to an embodiment, in operation 651, the electronic device (e.g., the electronic device 201 of FIG. 5) may identify the direction in which the slidable display (e.g., the display 260 of FIG. 5) is extended or contracted. For example, the electronic device 201 may identify the direction in which the slidable display 260 is extended or contracted based on the type of event. Further, the electronic device 201 may identify the progress direction of the slidable display 260 according to whether the current display area of the slidable display 260 is in an extended state or a contracted state.

According to an embodiment, in operation 653, the electronic device 201 may determine the shape or form of an object displayed on the slidable display based on the identified direction. For example, when the slidable display 260 is extended in the right direction (or left direction), the electronic device 201 may determine to indicate that the shape or form of the object is extended in the right direction (or left direction). Alternatively, when the slidable display 260 is extended in the upper direction (or lower direction), the processor 220 may determine to indicate that the shape or form of the object is extended in the upper direction (or lower direction). Further, the electronic device 201 may determine a visual effect applied to the object based on the identified direction. For example, when the slidable display 260 is extended in the right direction (or left direction), the electronic device 201 may determine the visual effect to be able to indicate that is extended in the right direction (or left direction). Alternatively, when the slidable display 260 is extended in the upper direction (or lower direction), the electronic device 201 may determine the visual effect to be able to indicate that it is extended in the upper direction (or lower direction).

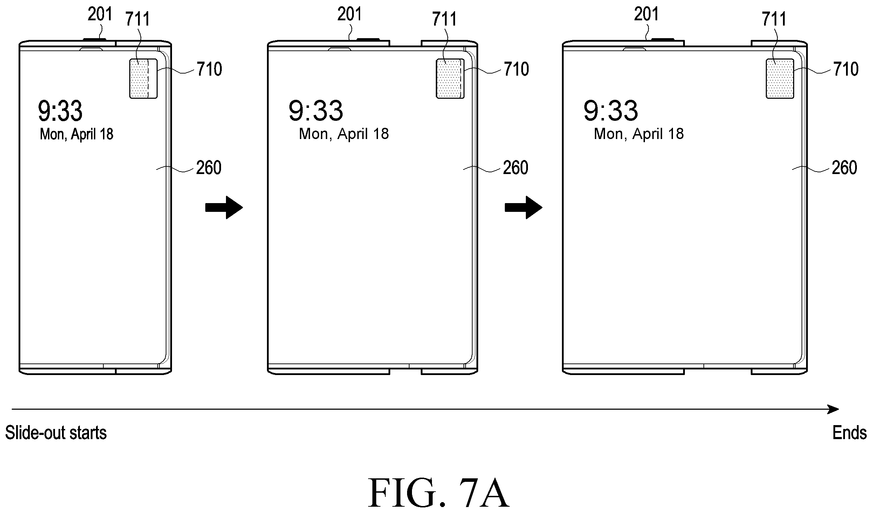

FIGS. 7A to 7D are views illustrating a method for displaying an object indicating a progress degree of extending or contracting a slidable display by an electronic device according to an embodiment.

Referring to FIG. 7A, the electronic device 201 according to an embodiment may display a first object 710 for indicating the progress degree of the extension when the slidable display 260 is extended in one direction (e.g., the right direction). For example, the operation of extending the slidable display 260 may mean a slide-out (or roll-out) operation. For example, the size (and shape) of the first object 710 may be determined based on the size of the display area of the slidable display 260 extended by the size designated in the event (e.g., an event that automatically extends the display area of the slidable display 260 by the designated size). For example, if an event of extending the slidable display 260 in the right direction is identified, the electronic device 201 may display the first object 710 in the form of extending in the right direction.

According to an embodiment, the electronic device 201 may apply a visual effect to the first area 711 of the first object 710 corresponding to the current display area of the slidable display 260. For example, the visual effect may mean displaying a designated color, overlapping the first area 711.

According to an embodiment, the electronic device 201 may apply a visual effect to the second area 711 of the first object 710 corresponding to the extended display area of the slidable display 260 while the slidable display 260 is extending in one direction. For example, the second area 712 to which the visual effect is applied may be wider than the first area 711. As the slidable display 260 is extended, the visual effect-applied second area 712 may be extended in the right direction.

According to an embodiment, if the slidable display 260 is extended by the designated size, the electronic device 201 may apply a visual effect to the entire area of the first object 710.

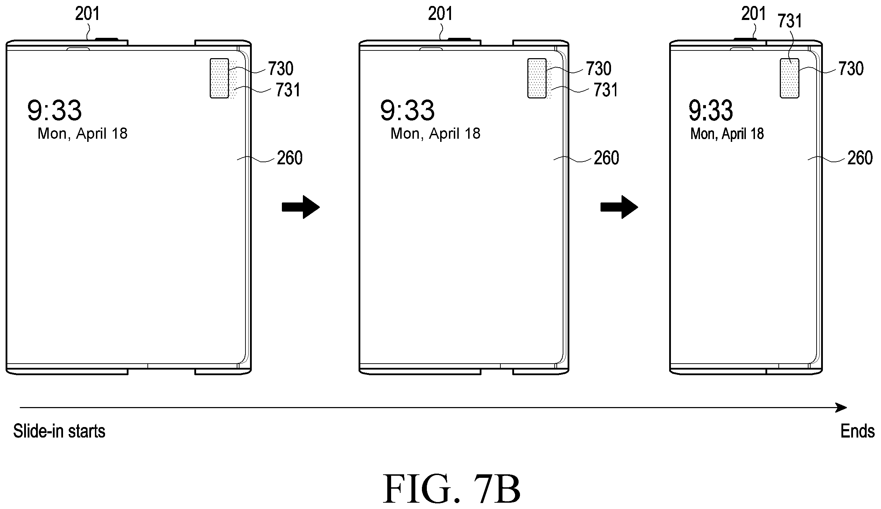

Referring to FIG. 7B, the electronic device 201 according to an embodiment may display a second object 730 for indicating the progress degree of the contraction when the slidable display 260 is contracted in one direction (e.g., left direction). The contraction of the slidable display 260 may mean a slide-in (or roll-in) operation. For example, the size (and shape) of the second object 730 may be determined based on the size of the display area of the slidable display 260 contracted by the size designated for the event (e.g., an event that automatically contracts the display area of the slidable display 260 by the designated size). For example, if an event of contracting the slidable display 260 in the left direction is identified, the electronic device 201 may display the second object 730 in the form of being contracted in the left direction.

According to an embodiment, the electronic device 201 may apply a visual effect to the third area 731 corresponding to the current display area of the slidable display 260. For example, the size of the third area 731 may be larger than the size of the second object 730. For example, the visual effect may mean displaying a designated color, overlapping the third area 731.

According to an embodiment, the electronic device 201 may apply a visual effect to the third area 731 corresponding to the contracted display area of the slidable display 260 while the slidable display 260 is contracted in one direction. For example, the visual effect-applied third area 731 may be reduced as compared to before contracted. As the slidable display 260 is contracted, the visual effect-applied third area 731 may be contracted in the left direction (or the direction in which the slidable display 260 is contracted).

According to an embodiment, if the slidable display 260 is contracted by the designated size, the electronic device 201 may apply a visual effect to the entire area of the second object 730.

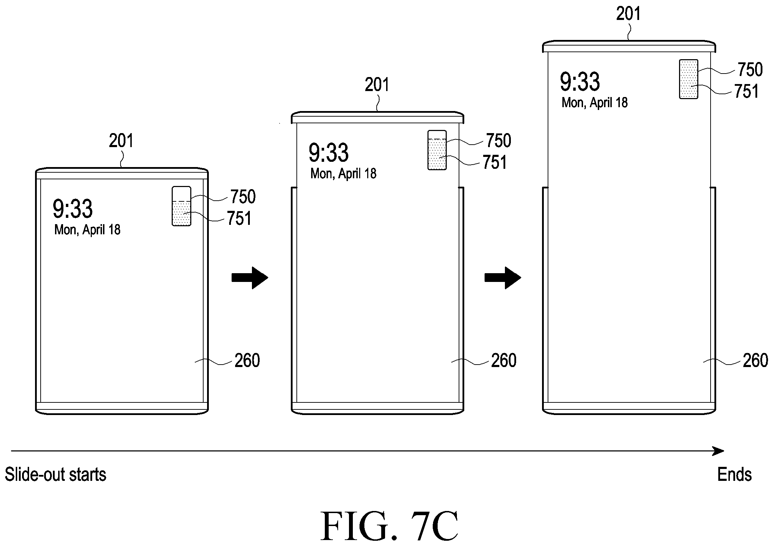

Referring to FIG. 7C, the electronic device 201 according to an embodiment may display a third object 750 for indicating the progress degree of the extension when the slidable display 260 is extended in one direction (e.g., in the upper direction). For example, the operation of extending the slidable display 260 may mean a slide-out (or roll-out) operation. For example, the size (and shape) of the third object 750 may be determined based on the size of the display area of the slidable display 260 extended by the size designated in the event (e.g., an event that automatically extends the display area of the slidable display 260 by the designated size). For example, if an event of extending the slidable display 260 in the upper direction is identified, the electronic device 201 may display the third object 750 in the form of extending in the upper direction.

According to an embodiment, the electronic device 201 may apply a visual effect to the first area 751 of the third object 750 corresponding to the current display area of the slidable display 260. For example, the visual effect may mean displaying a designated color, overlapping the first area 751.

According to an embodiment, the electronic device 201 may apply a visual effect to the second area 751 of the third object 750 corresponding to the extended display area of the slidable display 260 while the slidable display 260 is extending in one direction. For example, the second area 752 to which the visual effect is applied may be wider than the first area 751. As the slidable display 260 is extended, the visual effect-applied second area 752 may be extended in the upper direction.

According to an embodiment, if the slidable display 260 is extended by the designated size, the electronic device 201 may apply a visual effect to the entire area of the third object 750.

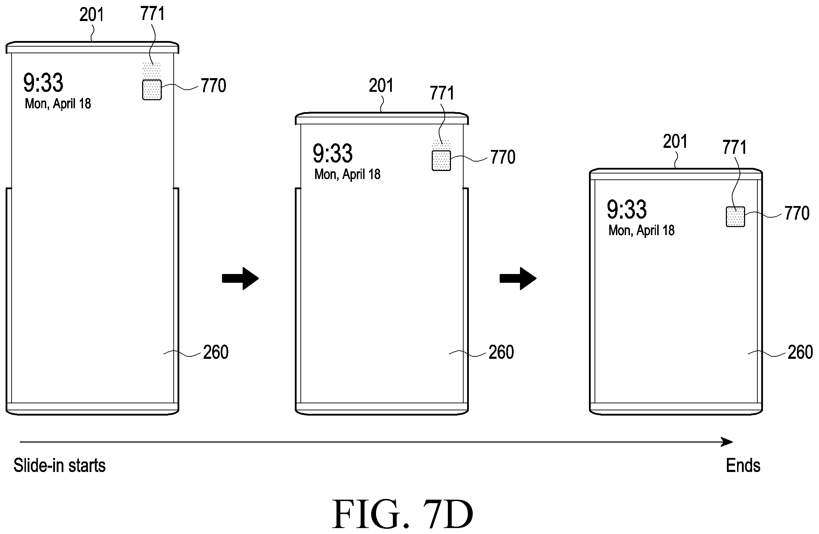

Referring to FIG. 7D, the electronic device 201 according to an embodiment may display a fourth object 770 for indicating the progress degree of the contraction when the slidable display 260 is contracted in one direction (e.g., right direction). For example, the contraction of the slidable display 260 may mean a slide-in (or roll-in) operation. For example, the size (and shape) of the fourth object 770 may be determined based on the size of the display area of the slidable display 260 contracted by the size designated for the event (e.g., an event that automatically contracts the display area of the slidable display 260 by the designated size). For example, if an event of extending the slidable display 260 in the right direction is identified, the electronic device 201 may display the fourth object 770 in the form of contracting in the lower direction.

According to an embodiment, the electronic device 201 may apply a visual effect to the third area 771 corresponding to the current display area of the slidable display 260. For example, the size of the third area 771 may be larger than the size of the fourth object 770. For example, the visual effect may mean displaying a designated color, overlapping the third area 771.

According to an embodiment, the electronic device 201 may apply a visual effect to the third area 771 corresponding to the contracted display area of the slidable display 260 while the slidable display 260 is contracted in one direction. For example, the visual effect-applied third area 771 may be reduced as compared to before contracted. As the slidable display 260 is contracted, the visual effect-applied third area 771 may be contracted in the lower direction (or the direction in which the slidable display 260 is contracted).

According to an embodiment, if the slidable display 260 is contracted by the designated size, the electronic device 201 may apply a visual effect to the entire area of the fourth object 770.

As described above, the electronic device 201 may intuitively provide information indicating the progress degree of extension or contraction of the slidable display 260 by applying the visual effect indicating the progress degree of the object displayed on the slidable display 260.

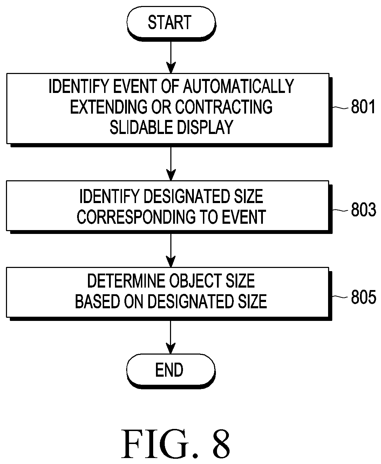

FIG. 8 is a flowchart illustrating a method for determining a size of an object based on an event by an electronic device according to an embodiment.

Referring to FIG. 8, according to an embodiment, in operation 801, the electronic device (e.g., the electronic device 201 of FIG. 5) may identify an event of automatically extending or contracting the slidable display (e.g., the slidable display 260 of FIG. 5).

According to an embodiment, in operation 803, the electronic device 201 may identify the designated size corresponding to the event. For example, the electronic device 201 may designate a size to which the slidable display 260 is extended or contracted in each of a plurality of events. For example, the size to which the slidable display 260 is extended may differ for each event. Further, the size to which the slidable display 260 is contracted may differ for each event. For example, when the event is to execute a specific application, the electronic device 201 may designate the size to which the slidable display 260 is extended or contracted based on the size and/or ratio of the execution screen of a specific application (or a specific function). For example, when the event is to execute a specific content (e.g., a video or image), the electronic device 201 may designate the size to which the slidable display 260 is extended or contracted based on the screen ratio or resolution of the specific content.

According to an embodiment, in operation 805, the electronic device 201 may determine the size of an object displayed on the slidable display based on the designated size. For example, the size (and/or shape) of the object displayed on the slidable display 260 may differ for each event.

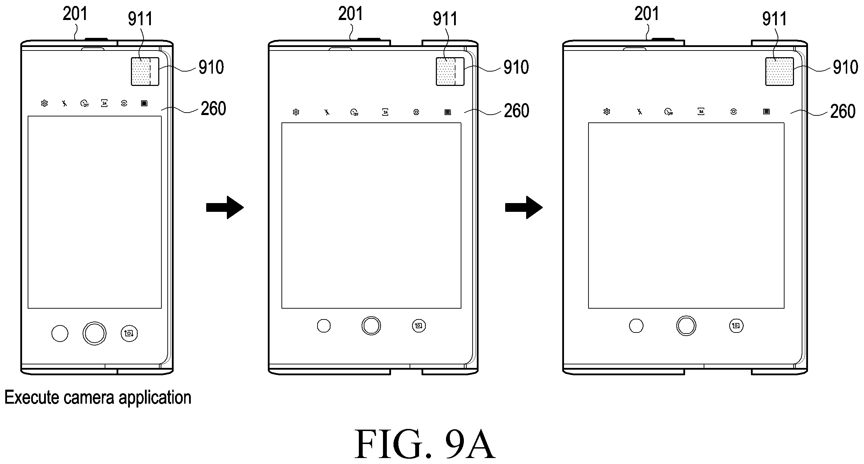

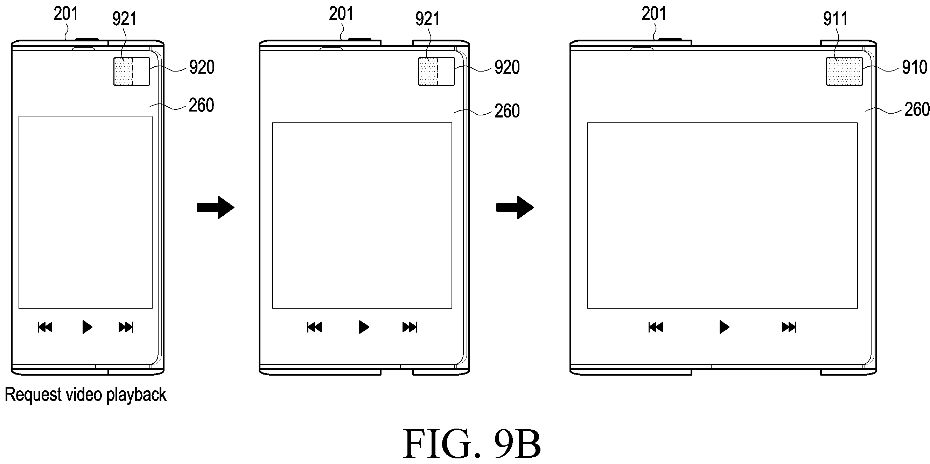

FIGS. 9A and 9B are views illustrating a method for determining a size of an object based on an event by an electronic device according to an embodiment.

Referring to FIG. 9A, the electronic device 201 may identify an event of executing a camera application.

According to an embodiment, if the event of executing the camera application is identified, the electronic device 201 may identify a size designated for the event. For example, the electronic device 201 may determine the size to which the slidable display 260 is extended based on the execution screen (e.g., screen ratio) of the camera application. The electronic device 201 may determine the size of the first object 910 for indicating the progress degree of extension of the slidable display 260 based on the size to which the slidable display 260 is extended. The electronic device 201 may display the first object 910 on the slidable display 260 based on the determined size. The electronic device 201 may display a visual effect 911 indicating the progress degree of the extension on the first object 910 until the extension of the slidable display 260 is completed.

Referring to FIG. 9B, the electronic device 201 may identify an event of requesting video playback.

According to an embodiment, if an event of requesting video playback is identified, the electronic device 201 may identify a size designated for the event. For example, the electronic device 201 may determine the size to which the slidable display 260 is extended based on the screen (e.g., screen ratio or resolution size) of the video. The electronic device 201 may determine the size of the second object 920 for indicating the progress degree of extension of the slidable display 260 based on the size to which the slidable display 260 is extended. The electronic device 201 may display the second object 920 on the slidable display 260 based on the determined size. The electronic device 201 may display a visual effect 921 indicating the progress degree of the extension on the second object 920 until the extension of the slidable display 260 is completed.

Referring to FIGS. 9A and 9B, according to an embodiment, the size of the first object 910 may be different from the size of the second object 920. For example, the size of the display area of the slidable display 260 extended according to the execution of the camera application may be smaller than the size of the display area of the slidable display 260 extended according to video playback. Accordingly, the size of the first object 910 may also be smaller than the size of the second object 920.

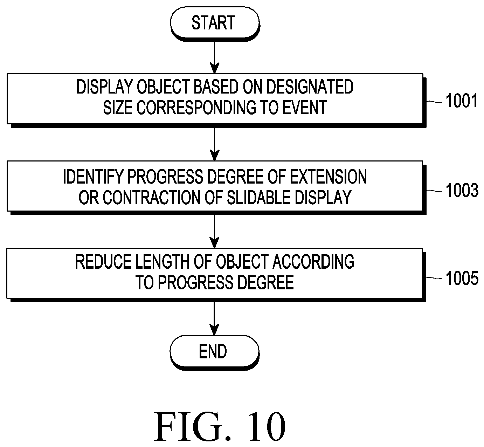

FIG. 10 is a flowchart illustrating a method for adjusting a length of an object according to a progress degree of extending or contracting a slidable display by an electronic device according to an embodiment.

Referring to FIG. 10, according to an embodiment, in operation 1001, the electronic device (e.g., the electronic device 201 of FIG. 5) may display an object on the slidable display (e.g., the slidable display 260 of FIG. 5) based on a designated size corresponding to an event. For example, the object may be an object for indicating the progress degree of extension or contraction of the slidable display 260. For example, the object may be displayed in a bar shape or a border shape displayed in the edge area of the slidable display 260. For example, the length of the object may be determined based on the designated size corresponding to the event.

According to an embodiment, in operation 1003, if extension or contraction of the slidable display starts, the electronic device 201 may identify the progress degree of extension or contraction of the slidable display.

According to an embodiment, in operation 1005, the electronic device 201 may reduce the length of the object according to the progress degree. The electronic device 201 may reduce the length of the object so as to correspond to the degree to which the slidable display 260 is extended or contracted. For example, the electronic device 201 may gradually reduce the length of the object until the extension of the slidable display 260 is completed. if the extension or contraction of the slidable display 260 is completed, the electronic device 201 may no longer display the object.

According to an embodiment, the electronic device 201 may reduce the size of the object according to the progress degree of extension or contraction of the slidable display. For example, the electronic device 201 may gradually decrease the size of the object until the extension of the slidable display 260 is completed. Thereafter, if the extension or contraction of the slidable display 260 is completed, the electronic device 201 may no longer display the object.

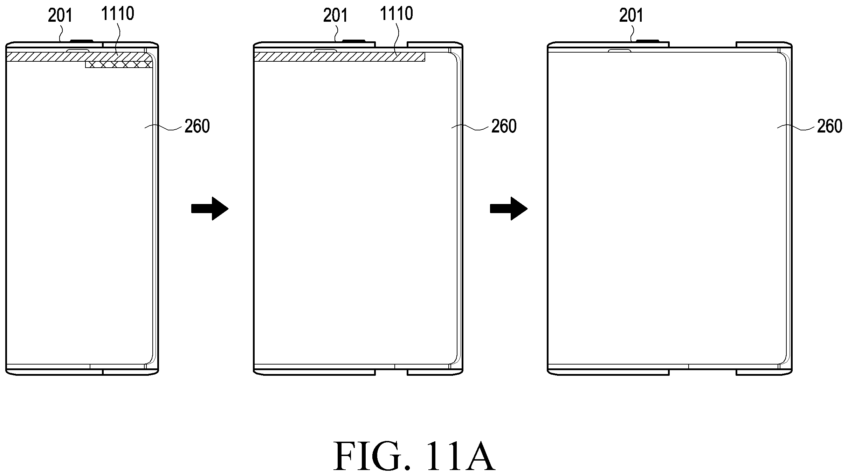

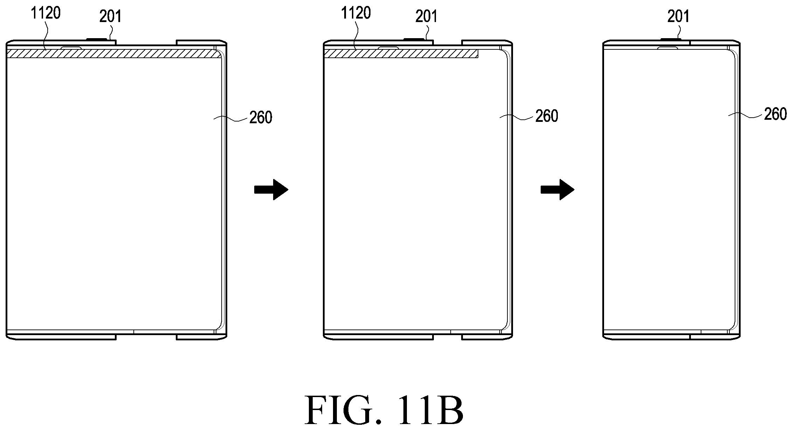

FIGS. 11A and 11B are views illustrating a method for adjusting a length of an object according to a progress degree of extending or contracting a slidable display by an electronic device according to an embodiment.

Referring to FIG. 11A, according to an embodiment, the electronic device 201 may identify an event of automatically enlarging (or extending) the slidable display 260. if an event is identified, the electronic device 201 may start the operation of extending the slidable display 260 by a designated size corresponding to the event. In this case, if the event is identified, the electronic device 201 may display an object 1110 having a designated color on the slidable display 260 based on the designated size corresponding to the event. For example, the object 1110 may be implemented in a bar shape. For example, the length of the object 1110 may be determined based on the designated size corresponding to the event. Meanwhile, in FIG. 11A, bar-shaped objects 1110 are displayed in two lines for convenience of description, but this is merely an example and the technical spirit of the present invention may not be limited thereto.

According to an embodiment, if the extension of the slidable display 260 is performed, the electronic device 201 may reduce the length of the object 1110 based on the progress degree of extension of the slidable display 260. For example, the length of the object 1110 may correspond to a time required for the extension of the slidable display 260 to be completed. For example, as the extension of the slidable display 260 proceeds, the length of the object 1110 may be gradually decreased. Through this, the electronic device 201 may inform the user of the progress degree (e.g., progress state and remaining time) of the extension of the slidable display 260.

According to an embodiment, if the extension of the slidable display 260 is completed, the electronic device 201 may no longer display the object 1110 on the slidable display 260.

Referring to FIG. 11B, according to an embodiment, the electronic device 201 may identify an event of automatically contracting the slidable display 260. if the event is identified, the electronic device 201 may start an operation of reducing the slidable display 260 by the designated size corresponding to the event. In this case, if the event is identified, the electronic device 201 may display an object 1120 having a designated color on the slidable display 260 based on the designated size corresponding to the event. For example, the object 1120 may be implemented in a bar shape. For example, the length of an object1120 may be determined based on the size of the current display area of the slidable display 260. Alternatively, on the other hand, the length of object 1120 may be designated in advance. In FIG. 11B, bar-shaped objects 1110 are displayed in one line for convenience of description, but this is merely an example and the technical spirit of the present invention may not be limited thereto.

According to an embodiment, if the contraction of the slidable display 260 is performed, the electronic device 201 may reduce the length of the object 1120 based on the progress degree of contraction of the slidable display 260. For example, the length of the object 1120 may correspond to a time required for the contraction of the slidable display 260 to be completed. For example, as the contraction of the slidable display 260 proceeds, the length of the object 1120 may be gradually decreased. Through this, the electronic device 201 may inform the user of the progress degree of the contraction of the slidable display 260.

According to an embodiment, if the contraction of the slidable display 260 is completed, the electronic device 201 may no longer display the object 1120 on the slidable display 260.

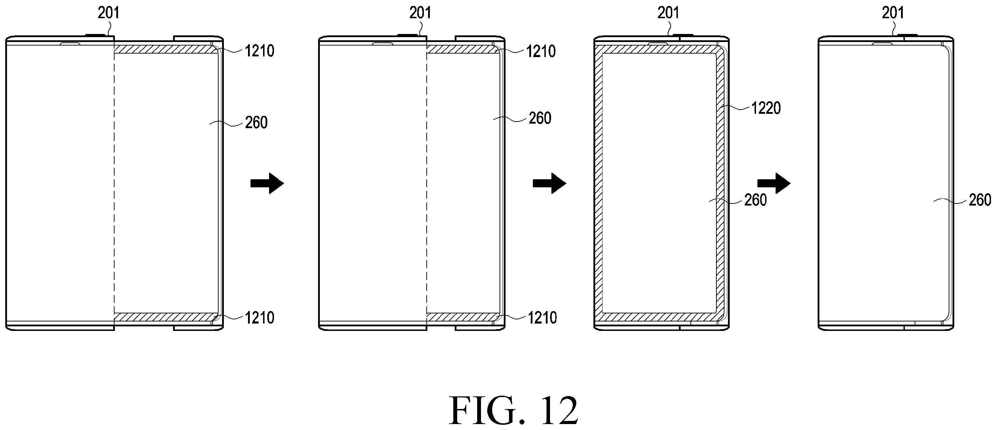

FIG. 12 is a view illustrating a method for adjusting a length of an object in a border shape according to a progress degree of extending or contracting a slidable display by an electronic device according to an embodiment.

Referring to FIG. 12, according to an embodiment, the electronic device 201 may identify an event of automatically contracting the slidable display 260. if the event is identified, the electronic device 201 may start an operation of reducing the slidable display 260 by the designated size corresponding to the event. The electronic device 201 may display an object 1210 having a designated color in the upper and lower areas of the slidable display 260 based on the designated size corresponding to the event. For example, the object 1210 may be displayed from a first point 1211 to a second point 1211 corresponding to the designated size to which the slidable display 260 is to be contracted.

According to an embodiment, if the contraction of the slidable display 260 is performed, the electronic device 201 may reduce the length of the object 1210 based on the progress degree of contraction of the slidable display 260. For example, the length of the object 1210 may be decreased with respect to the first point 1211. For example, the length of the object 1210 may correspond to a time required for the contraction of the slidable display 260 to be completed. For example, as the contraction of the slidable display 260 proceeds, the length of the object 1210 may be gradually decreased. Through this, the electronic device 201 may inform the user of the progress degree of the contraction of the slidable display 260.

According to an embodiment, if the contraction of the slidable display 260 is completed, the electronic device 201 may display an object 1220 having a designated color in the entire edge area of the slidable display 260. Accordingly, the electronic device 201 may inform the user that the contraction of the slidable display 260 is completed.

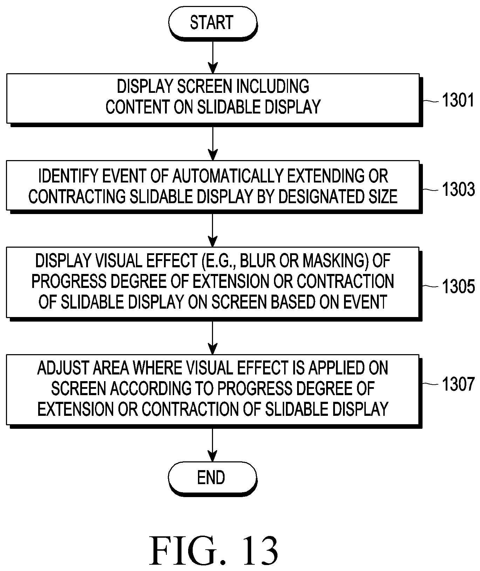

FIG. 13 is a flowchart illustrating a method for applying a visual effect on a screen displayed on a slidable display according to a progress degree of extending or contracting the slidable display by an electronic device according to an embodiment.

Referring to FIG. 13, according to an embodiment, in operation 1301, an electronic device (the electronic device 201 of FIG. 5) may display a screen including content on a slidable display (e.g., the slidable display 260 of FIG. 5).

According to an embodiment, in operation 1303, the electronic device 201 may identify an event in which the slidable display 260 automatically extends or contracts by a designated size.

According to an embodiment, in operation 1305, the electronic device 201 may display a visual effect (e.g., blur or masking) indicating the progress degree of extension or contraction of the slidable display 260 on the screen based on the identified event. For example, the electronic device 201 may apply a visual effect (e.g., blur or masking) to overlap the screen including the content.

According to an embodiment, in operation 1307, the electronic device 201 may adjust the area to which the visual effect (e.g., blur or masking) is applied on the screen according to the progress degree of the extension or contraction of the slidable display 260. For example, the area to which the visual effect is applied may correspond to the time required for the slidable display 260 to complete the extension or contraction. For example, as the extension or contraction of the slidable display 260 proceeds, the area to which the visual effect is applied may be gradually reduced. Through this, the electronic device 201 may inform the user of the progress degree of the contraction of the slidable display 260 through the visual effect applied on the screen.

According to an embodiment, if the extension or contraction of the slidable display 260 is completed, the electronic device 201 may no longer apply the visual effect on the screen displayed on the slidable display 260. Accordingly, the electronic device 201 may inform the user that the extension or contraction of the slidable display 260 is completed.

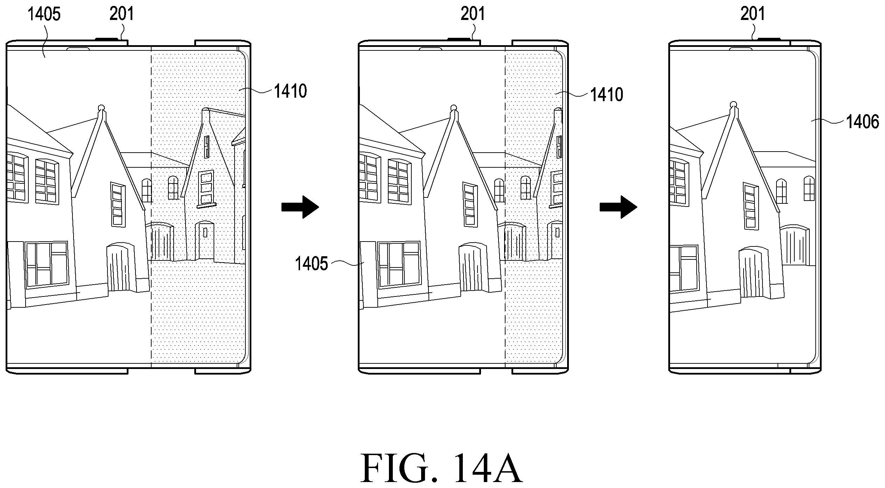

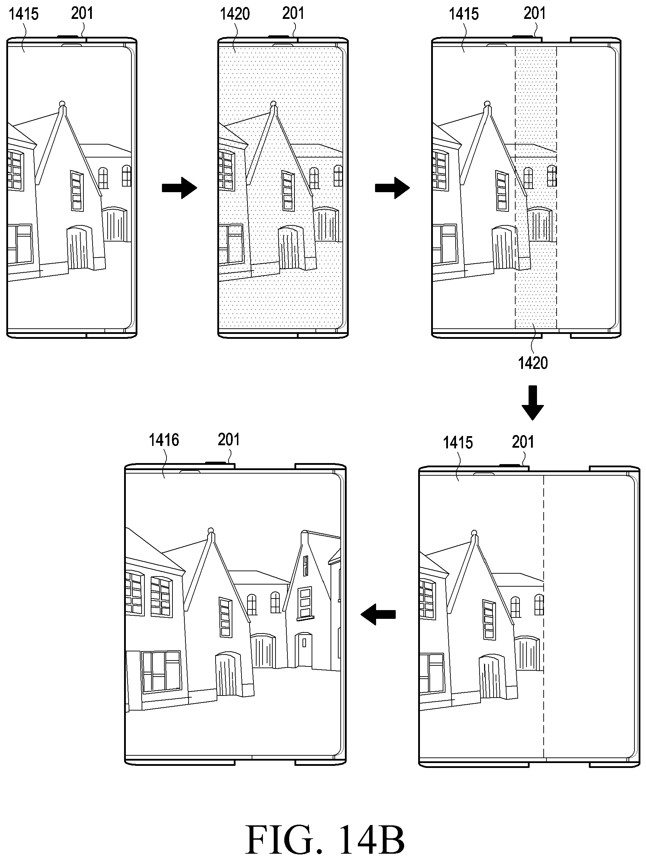

FIGS. 14A and 14B are views illustrating a method for applying a visual effect on a screen displayed on a slidable display according to a progress degree of extending or contracting the slidable display by an electronic device according to an embodiment.

Referring to FIG. 14A, according to an embodiment, the electronic device 201 may display a screen 1405 including content on a slidable display (e.g., the slidable display 260 of FIG. 5).

According to an embodiment, the electronic device 201 may identify an event in which the slidable display 260 automatically contracts by a designated size. The electronic device 201 may display a visual effect indicating the progress degree of the contraction of the slidable display 260 in the first area 1410 of the screen 1405 based on the identified event. For example, the electronic device 201 may blur the first area 1410 of the screen 1405 or mask the first area of the screen 1405. For example, the first area 1410 may be an area that is rolled in of the display area of the slidable display 260 by the contraction of the slidable display 260.

According to an embodiment, as the slidable display 260 is contracted, the area to which the visual effect is applied may also be contracted. if the contraction of the slidable display 260 is completed, the electronic device 201 may no longer apply the visual effect to the screen 1405. Further, the electronic device 201 may display a screen 1406 resized to fit the display area of the contracted slidable display 260.

Referring to FIG. 14B, according to an embodiment, the electronic device 201 may display a screen 1415 including content on a slidable display (e.g., the slidable display 260 of FIG. 5).

According to an embodiment, the electronic device 201 may identify an event in which the slidable display 260 automatically extends by a designated size. The electronic device 201 may display a visual effect indicating the progress degree of the extension of the slidable display 260 in the second area 1420 of the screen 1415 based on the identified event. For example, the electronic device 201 may blur the second area 1420 of the screen 1415 or mask the second area of the screen 1415. For example, when the extension of the slidable display 260 starts, the second area 1420 may correspond to the entire area of the screen 1415.

According to an embodiment, as the slidable display 260 is extended, the area to which the visual effect is applied may be contracted. If the extension of the slidable display 260 is completed, the electronic device 201 may no longer apply the visual effect to the screen 1415. Further, the electronic device 201 may display a screen 1416 resized to fit the display area of the extended slidable display 260.

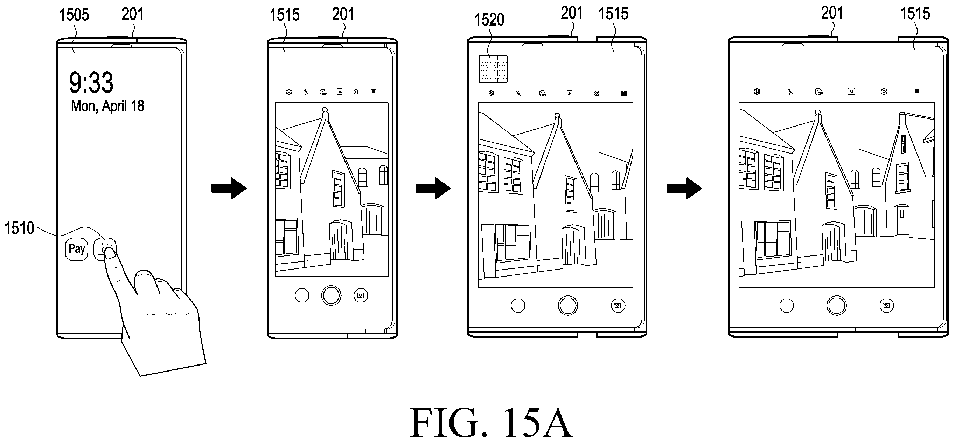

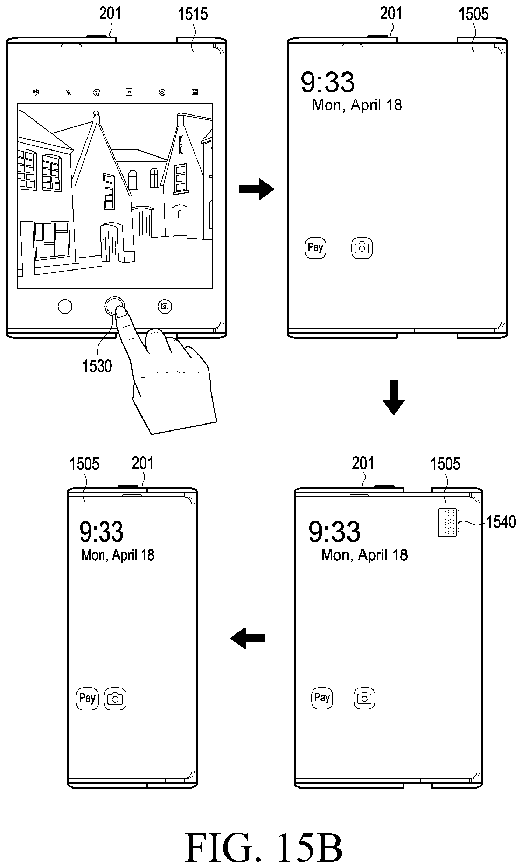

FIGS. 15A and 15B are views illustrating a method for displaying an object indicating a progress degree of extending or contracting a slidable display based on an event by an electronic device according to an embodiment.

Referring to FIG. 15A, according to an embodiment, the electronic device 201 may display a home screen 1505 on a slidable display (e.g., the slidable display 260 of FIG. 2). For example, the home screen 1505 may include a first icon 1510 representing a camera application.

According to an embodiment, if a user input to the first icon 1510 is identified, the electronic device 201 may execute the camera application corresponding to the first icon 1510. The electronic device 201 may display the execution screen 1515 of the camera application.

According to an embodiment, the electronic device 201 may enlarge the display area of the slidable display 260 according to execution of the camera application. For example, the electronic device 201 may identify the size of the display area of the slidable display 260 to be enlarged according to the execution of the camera application. The electronic device 201 may display the first object 1520 on the execution screen 1515 while the slidable display 260 is extended. The electronic device 201 may apply a visual effect to the first object 1520 according to the progress degree of extension of the slidable display 260. For example, as the slidable display 260 is extended, an area in which the visual effect is displayed on the first object 1520 may also be increased. The electronic device 201 may gradually increase the area in which the visual effect is displayed until the slidable display 260 is extended by the designated size. If the extension of the slidable display 260 is completed, the electronic device 201 may apply a visual effect to the entire area of the first object 1520.

According to an embodiment, the electronic device 201 may stop displaying the first object 1520 after the extension of the slidable display 260 is completed.

Referring to FIG. 15B, according to an embodiment, the electronic device 201 may display the execution screen 1515 of the camera application in a state in which the slidable display 260 is extended. The electronic device 201 may display a home screen icon 1530 on the lower end portion of the slidable display 260.

According to an embodiment, if a user input to the home screen icon 1530 is identified, the electronic device 201 may display the home screen 1505.

According to an embodiment, the electronic device 201 may contract the display area of the slidable display 260 according to the display of the home screen 1530. For example, the electronic device 201 may identify the size of the display area of the slidable display 260 to be contracted according to the display of the home screen 1505. The electronic device 201 may display the second object 1540 on the home screen 1505 while the slidable display 260 is contracted. The electronic device 201 may apply a visual effect to the second object 1540 according to the progress degree of contraction of the slidable display 260. For example, as the slidable display 260 is extended, an area in which the visual effect is displayed on the second object 1540 may also be reduced. The electronic device 201 may gradually reduce the area in which the visual effect is displayed until the slidable display 260 is contracted by the designated size. If the contraction of the slidable display 260 is completed, the electronic device 201 may not apply a visual effect to the second object 1540.

According to an embodiment, the electronic device 201 may stop displaying the second object 1540 after the contraction of the slidable display 260 is completed.

According to the above-described method, the electronic device 201 may inform the user of the progress degree (e.g., progress state and remaining time) of the extension or contraction of the slidable display 260.

The electronic device 1201, 1202, or 1204, which is described below, may be implemented to be identical or similar to the above-described electronic device 201.

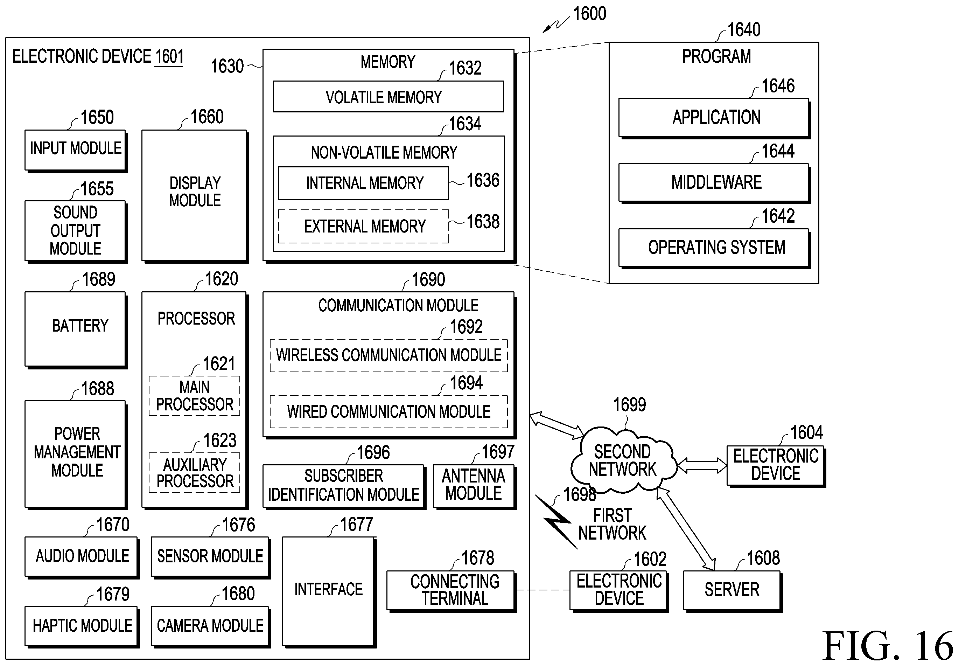

FIG. 16 is a block diagram illustrating an electronic device 1601 in a network environment 1600 according to various embodiments. Referring to FIG. 16, the electronic device 1601 in the network environment 1600 may communicate with at least one of an electronic device 1602 via a first network 1698 (e.g., a short-range wireless communication network), or an electronic device 1604 or a server 1608 via a second network 1699 (e.g., a long-range wireless communication network). According to an embodiment, the electronic device 1601 may communicate with the electronic device 1604 via the server 1608. According to an embodiment, the electronic device 1601 may include a processor 1620, memory 1630, an input module 1650, a sound output module 1655, a display module 1660, an audio module 1670, a sensor module 1676, an interface 1677, a connecting terminal 1678, a haptic module 1679, a camera module 1680, a power management module 1688, a battery 1689, a communication module 1690, a subscriber identification module (SIM) 1696, or an antenna module 1697. In an embodiment, at least one (e.g., the connecting terminal 1678) of the components may be omitted from the electronic device 1601, or one or more other components may be added in the electronic device 101. According to an embodiment, some (e.g., the sensor module 1676, the camera module 1680, or the antenna module 1697) of the components may be integrated into a single component (e.g., the display module 1660).

The processor 1620 may execute, for example, software (e.g., a program 1640) to control at least one other component (e.g., a hardware or software component) of the electronic device 1601 coupled with the processor 1620, and may perform various data processing or computation. According to an embodiment, as at least part of the data processing or computation, the processor 1620 may store a command or data received from another component (e.g., the sensor module 1676 or the communication module 1690) in volatile memory 1632, process the command or the data stored in the volatile memory 1632, and store resulting data in non-volatile memory 1634. According to an embodiment, the processor 1620 may include a main processor 1621 (e.g., a central processing unit (CPU) or an application processor (AP)), or an auxiliary processor 1623 (e.g., a graphics processing unit (GPU), a neural processing unit (NPU), an image signal processor (ISP), a sensor hub processor, or a communication processor (CP)) that is operable independently from, or in conjunction with, the main processor 121. For example, when the electronic device 1601 includes the main processor 1621 and the auxiliary processor 1623, the auxiliary processor 1623 may be configured to use lower power than the main processor 1621 or to be specified for a designated function. The auxiliary processor 1623 may be implemented as separate from, or as part of the main processor 1621.

The auxiliary processor 1623 may control at least some of functions or states related to at least one component (e.g., the display module 1660, the sensor module 1676, or the communication module 1690) among the components of the electronic device 1601, instead of the main processor 1621 while the main processor 1621 is in an inactive (e.g., sleep) state, or together with the main processor 1621 while the main processor 1621 is in an active state (e.g., executing an application). According to an embodiment, the auxiliary processor 1623 (e.g., an image signal processor or a communication processor) may be implemented as part of another component (e.g., the camera module 1680 or the communication module 1690) functionally related to the auxiliary processor 123. According to an embodiment, the auxiliary processor 1623 (e.g., the neural processing unit) may include a hardware structure specified for artificial intelligence model processing. The artificial intelligence model may be generated via machine learning. Such learning may be performed, e.g., by the electronic device 1601 where the artificial intelligence is performed or via a separate server (e.g., the server 1608). Learning algorithms may include, but are not limited to, e.g., supervised learning, unsupervised learning, semi-supervised learning, or reinforcement learning. The artificial intelligence model may include a plurality of artificial neural network layers. The artificial neural network may be a deep neural network (DNN), a convolutional neural network (CNN), a recurrent neural network (RNN), a restricted Boltzmann machine (RBM), a deep belief network (DBN), a bidirectional recurrent deep neural network (BRDNN), deep Q-network or a combination of two or more thereof but is not limited thereto. The artificial intelligence model may, additionally or alternatively, include a software structure other than the hardware structure.

The memory 1630 may store various data used by at least one component (e.g., the processor 1620 or the sensor module 1676) of the electronic device 1601. The various data may include, for example, software (e.g., the program 1640) and input data or output data for a command related thereto. The memory 1630 may include the volatile memory 1632 or the non-volatile memory 1634.

The program 1640 may be stored in the memory 1630 as software, and may include, for example, an operating system (OS) 1642, middleware 1644, or an application 1646.

The input module 1650 may receive a command or data to be used by other component (e.g., the processor 1620) of the electronic device 1601, from the outside (e.g., a user) of the electronic device 1601. The input module 1650 may include, for example, a microphone, a mouse, a keyboard, keys (e.g., buttons), or a digital pen (e.g., a stylus pen).

The sound output module 1655 may output sound signals to the outside of the electronic device 1601. The sound output module 1655 may include, for example, a speaker or a receiver. The speaker may be used for general purposes, such as playing multimedia or playing record. The receiver may be used for receiving incoming calls. According to an embodiment, the receiver may be implemented as separate from, or as part of the speaker.

The display module 1660 may visually provide information to the outside (e.g., a user) of the electronic device 1601. The display 1660 may include, for example, a display, a hologram device, or a projector and control circuitry to control a corresponding one of the display, hologram device, and projector. According to an embodiment, the display 1660 may include a touch sensor configured to detect a touch, or a pressure sensor configured to measure the intensity of a force generated by the touch.

The audio module 1670 may convert a sound into an electrical signal and vice versa. According to an embodiment, the audio module 1670 may obtain the sound via the input module 1650, or output the sound via the sound output module 1655 or a headphone of an external electronic device (e.g., an electronic device 1602) directly (e.g., wiredly) or wirelessly coupled with the electronic device 1601.

The sensor module 1676 may detect an operational state (e.g., power or temperature) of the electronic device 1601 or an environmental state (e.g., a state of a user) external to the electronic device 101, and then generate an electrical signal or data value corresponding to the detected state. According to an embodiment, the sensor module 1676 may include, for example, a gesture sensor, a gyro sensor, an atmospheric pressure sensor, a magnetic sensor, an accelerometer, a grip sensor, a proximity sensor, a color sensor, an infrared (IR) sensor, a biometric sensor, a temperature sensor, a humidity sensor, or an illuminance sensor.

The interface 1677 may support one or more specified protocols to be used for the electronic device 1601 to be coupled with the external electronic device (e.g., the electronic device 1602) directly (e.g., wiredly) or wirelessly. According to an embodiment, the interface 1677 may include, for example, a high definition multimedia interface (HDMI), a universal serial bus (USB) interface, a secure digital (SD) card interface, or an audio interface.

A connecting terminal 1678 may include a connector via which the electronic device 1601 may be physically connected with the external electronic device (e.g., the electronic device 1602). According to an embodiment, the connecting terminal 1678 may include, for example, an HDMI connector, a USB connector, an SD card connector, or an audio connector (e.g., a headphone connector).

The haptic module 1679 may convert an electrical signal into a mechanical stimulus (e.g., a vibration or motion) or electrical stimulus which may be recognized by a user via his tactile sensation or kinesthetic sensation. According to an embodiment, the haptic module 1679 may include, for example, a motor, a piezoelectric element, or an electric stimulator.

The camera module 1680 may capture a still image or moving images. According to an embodiment, the camera module 1680 may include one or more lenses, image sensors, image signal processors, or flashes.

The power management module 1688 may manage power supplied to the electronic device 1601. According to an embodiment, the power management module 1688 may be implemented as at least part of, for example, a power management integrated circuit (PMIC).

The battery 1689 may supply power to at least one component of the electronic device 1601. According to an embodiment, the battery 1689 may include, for example, a primary cell which is not rechargeable, a secondary cell which is rechargeable, or a fuel cell.

The communication module 1690 may support establishing a direct (e.g., wired) communication channel or a wireless communication channel between the electronic device 1601 and the external electronic device (e.g., the electronic device 1602, the electronic device 1604, or the server 1608) and performing communication via the established communication channel. The communication module 1690 may include one or more communication processors that are operable independently from the processor 1620 (e.g., the application processor (AP)) and supports a direct (e.g., wired) communication or a wireless communication. According to an embodiment, the communication module 1690 may include a wireless communication module 1692 (e.g., a cellular communication module, a short-range wireless communication module, or a global navigation satellite system (GNSS) communication module) or a wired communication module 1694 (e.g., a local area network (LAN) communication module or a power line communication (PLC) module). A corresponding one of these communication modules may communicate with the external electronic device 1604 via a first network 1698 (e.g., a short-range communication network, such as Bluetooth^{™}, wireless-fidelity (Wi-Fi) direct, or infrared data association (IrDA)) or a second network 1699 (e.g., a long-range communication network, such as a legacy cellular network, a 5G network, a next-generation communication network, the Internet, or a computer network (e.g., local area network (LAN) or wide area network (WAN)). These various types of communication modules may be implemented as a single component (e.g., a single chip), or may be implemented as multi components (e.g., multi chips) separate from each other. The wireless communication module 1692 may identify or authenticate the electronic device 1601 in a communication network, such as the first network 1698 or the second network 1699, using subscriber information (e.g., international mobile subscriber identity (IMSI)) stored in the subscriber identification module 1696.

The wireless communication module 1692 may support a 5G network, after a 4G network, and next-generation communication technology, e.g., new radio (NR) access technology. The NR access technology may support enhanced mobile broadband (eMBB), massive machine type communications (mMTC), or ultra-reliable and low-latency communications (URLLC). The wireless communication module 1692 may support a high-frequency band (e.g., the mmWave band) to achieve, e.g., a high data transmission rate. The wireless communication module 1692 may support various technologies for securing performance on a high-frequency band, such as, e.g., beamforming, massive multiple-input and multiple-output (massive MIMO), full dimensional MIMO (FD-MIMO), array antenna, analog beam-forming, or large scale antenna. The wireless communication module 1692 may support various requirements specified in the electronic device 1601, an external electronic device (e.g., the electronic device 1604), or a network system (e.g., the second network 1699). According to an embodiment, the wireless communication module 1692 may support a peak data rate (e.g., 20Gbps or more) for implementing eMBB, loss coverage (e.g., 164dB or less) for implementing mMTC, or U-plane latency (e.g., 0.5ms or less for each of downlink (DL) and uplink (UL), or a round trip of 1ms or less) for implementing URLLC.

The antenna module 1697 may transmit or receive a signal or power to or from the outside (e.g., the external electronic device). According to an embodiment, the antenna module 1697 may include one antenna including a radiator formed of a conductor or conductive pattern formed on a substrate (e.g., a printed circuit board (PCB)). According to an embodiment, the antenna module 1697 may include a plurality of antennas (e.g., an antenna array). In this case, at least one antenna appropriate for a communication scheme used in a communication network, such as the first network 1698 or the second network 1699, may be selected from the plurality of antennas by, e.g., the communication module 1690. The signal or the power may then be transmitted or received between the communication module 1690 and the external electronic device via the selected at least one antenna. According to an embodiment, other parts (e.g., radio frequency integrated circuit (RFIC)) than the radiator may be further formed as part of the antenna module 1697.

According to various embodiments, the antenna module 1697 may form a mmWave antenna module. According to an embodiment, the mmWave antenna module may include a printed circuit board, a RFIC disposed on a first surface (e.g., the bottom surface) of the printed circuit board, or adjacent to the first surface and capable of supporting a designated high-frequency band (e.g., the mmWave band), and a plurality of antennas (e.g., array antennas) disposed on a second surface (e.g., the top or a side surface) of the printed circuit board, or adjacent to the second surface and capable of transmitting or receiving signals of the designated high-frequency band.

At least some of the above-described components may be coupled mutually and communicate signals (e.g., commands or data) therebetween via an inter-peripheral communication scheme (e.g., a bus, general purpose input and output (GPIO), serial peripheral interface (SPI), or mobile industry processor interface (MIPI)).

According to an embodiment, commands or data may be transmitted or received between the electronic device 1601 and the external electronic device 1604 via the server 1608 coupled with the second network 1699. The external electronic devices 1602 or 1604 each may be a device of the same or a different type from the electronic device 1601. According to an embodiment, all or some of operations to be executed at the electronic device 1601 may be executed at one or more of the external electronic devices 1602, 1604, or 1608. For example, if the electronic device 1601 should perform a function or a service automatically, or in response to a request from a user or another device, the electronic device 1601, instead of, or in addition to, executing the function or the service, may request the one or more external electronic devices to perform at least part of the function or the service. The one or more external electronic devices receiving the request may perform the at least part of the function or the service requested, or an additional function or an additional service related to the request, and transfer an outcome of the performing to the electronic device 1601. The electronic device 1601 may provide the outcome, with or without further processing of the outcome, as at least part of a reply to the request. To that end, a cloud computing, distributed computing, mobile edge computing (MEC), or client-server computing technology may be used, for example. The electronic device 1601 may provide ultra low-latency services using, e.g., distributed computing or mobile edge computing. In another embodiment, the external electronic device 1604 may include an Internet-of-things (IoT) device. The server 1608 may be an intelligent server using machine learning and/or a neural network. According to an embodiment, the external electronic device 1604 or the server 1608 may be included in the second network 1699. The electronic device 1601 may be applied to intelligent services (e.g., smart home, smart city, smart car, or health-care) based on 5G communication technology or IoT-related technology.

According to an embodiment, an electronic device 201 may comprise a slidable display 260 and a processor 220. According to an embodiment, the processor may be configured to display a screen including content on the slidable display. According to an embodiment, the processor may be configured to identify an event for automatically extending or contracting the slidable display by a designated size. The designated size may be determined based on the event. According to an embodiment, the processor may be configured to display an object for indicating a progress degree of extending or contracting the slidable display on the slidable display based on the event. The size of the object may be determined based on the designated size. According to an embodiment, the processor may be configured to apply a visual effect indicating the progress degree to the object while extending or contracting the slidable display by the designated size.

According to an embodiment, the processor may be configured to apply the visual effect to allow a color or blur effect corresponding to the progress degree to overlap the object.

According to an embodiment, the processor may be configured to apply the visual effect to increase or decrease an area where the color or blur effect is displayed over the object according to the progress degree.

According to an embodiment, the processor may be configured to apply the visual effect to increase or decrease a brightness of the color or blur effect over the object according to the progress degree.

According to an embodiment, the processor may be configured to display information about a remaining time on the slidable display until the extension or the contraction is completed based on the progress degree.

According to an embodiment, the processor may be configured to display information indicating a progress rate for the extension or the contraction on the slidable display based on the progress degree.

According to an embodiment, the processor may be configured to identify the designated size corresponding to the event based on identifying the event. According to an embodiment, the processor may be configured to determine at least one of a shape or a form of the object based on a direction of the extension or the contraction of the slidable display.

According to an embodiment, the processor may be configured to determine a size of the object based on a size of a display area of the slidable display when the extension or the contraction of the slidable display is completed.

According to an embodiment, the processor may be configured to decrease a size or a length of the object according to the progress degree.

According to an embodiment, the processor may be configured to apply a masking effect or a blur effect to the screen displayed on the slidable display according to the progress degree.

According to an embodiment, a method for operating an electronic device 201 may comprise displaying a screen including content on a slidable display 260 included in the electronic device. According to an embodiment, the method for operating the electronic device may comprise identifying an event for automatically extending or contracting the slidable display by a designated size. The designated size may be determined based on the event. According to an embodiment, the method for operating the electronic device may comprise displaying an object for indicating a progress degree of extending or contracting the slidable display on the slidable display based on the event. The size of the object may be determined based on the designated size. According to an embodiment, the method for operating the electronic device may comprise applying a visual effect indicating the progress degree to the object while extending or contracting the slidable display by the designated size.

According to an embodiment, applying the visual effect to the object may include applying the visual effect to allow a color or blur effect corresponding to the progress degree to overlap the object.

According to an embodiment, applying the visual effect to the object may include applying the visual effect to increase or decrease an area where the color or blur effect is displayed over the object according to the progress degree.

According to an embodiment, the method for operating the electronic device may further comprise applying a masking effect or a blur effect to the screen displayed on the slidable display according to the progress degree.

According to an embodiment, the method for operating the electronic device may further comprise displaying information about a remaining time on the slidable display until the extension or the contraction is completed based on the progress degree.

According to an embodiment, the method for operating the electronic device may further comprise displaying information indicating a progress rate for the extension or the contraction on the slidable display based on the progress degree.

According to an embodiment, the method for operating the electronic device may further comprise identifying the designated size corresponding to the event based on identifying the event. According to an embodiment, the method for operating the electronic device may further comprise determining at least one of a shape or a form of the object based on a direction of the extension or the contraction of the slidable display.

According to an embodiment, the method for operating the electronic device may further comprise determining a size of the object based on a size of a display area of the slidable display when the extension or the contraction of the slidable display is completed.

According to an embodiment, the method for operating the electronic device may further comprise decreasing a size or a length of the object according to the progress degree.

According to an embodiment, a non-transitory recording medium 230 may store instructions capable of executing displaying a screen including content on a slidable display 260 included in an electronic device, identifying an event for automatically extending or contracting the slidable display by a designated size, the designated size being determined based on the event, displaying an object for indicating a progress degree of extending or contracting the slidable display on the slidable display based on the event, the size of the object being determined based on the designated size, and applying a visual effect indicating the progress degree to the object while extending or contracting the slidable display by the designated size.

The electronic device according to various embodiments of the disclosure may be one of various types of electronic devices. The electronic devices may include, for example, a portable communication device (e.g., a smartphone), a computer device, a portable multimedia device, a portable medical device, a camera, a wearable device, or a home appliance. According to an embodiment of the disclosure, the electronic devices are not limited to those described above.

It should be appreciated that various embodiments of the present disclosure and the terms used therein are not intended to limit the technological features set forth herein to particular embodiments and include various changes, equivalents, or replacements for a corresponding embodiment. With regard to the description of the drawings, similar reference numerals may be used to refer to similar or related elements. It is to be understood that a singular form of a noun corresponding to an item may include one or more of the things, unless the relevant context clearly indicates otherwise. As used herein, each of such phrases as "A or B," "at least one of A and B," "at least one of A or B," "A, B, or C," "at least one of A, B, and C," and "at least one of A, B, or C," may include all possible combinations of the items enumerated together in a corresponding one of the phrases. As used herein, such terms as "1st" and "2nd," or "first" and "second" may be used to simply distinguish a corresponding component from another, and does not limit the components in other aspect (e.g., importance or order). It is to be understood that if an element (e.g., a first element) is referred to, with or without the term "operatively" or "communicatively", as "coupled with," "coupled to," "connected with," or "connected to" another element (e.g., a second element), it means that the element may be coupled with the other element directly (e.g., wiredly), wirelessly, or via a third element.

As used herein, the term "module" may include a unit implemented in hardware, software, or firmware, and may interchangeably be used with other terms, for example, "logic," "logic block," "part," or "circuitry". A module may be a single integral component, or a minimum unit or part thereof, adapted to perform one or more functions. For example, according to an embodiment, the module may be implemented in a form of an application-specific integrated circuit (ASIC).

Various embodiments as set forth herein may be implemented as software (e.g., the program 1640) including one or more instructions that are stored in a storage medium (e.g., internal memory 1636 or external memory 1638) that is readable by a machine (e.g., the electronic device 1601). For example, a processor (e.g., the processor 1620) of the machine (e.g., the electronic device 1601) may invoke at least one of the one or more instructions stored in the storage medium, and execute it, with or without using one or more other components under the control of the processor. This allows the machine to be operated to perform at least one function according to the at least one instruction invoked. The one or more instructions may include a code generated by a complier or a code executable by an interpreter. The storage medium readable by the machine may be provided in the form of a non-transitory storage medium. Wherein, the term "non-transitory" simply means that the storage medium is a tangible device, and does not include a signal (e.g., an electromagnetic wave), but this term does not differentiate between where data is semi-permanently stored in the storage medium and where the data is temporarily stored in the storage medium.

According to an embodiment, a method according to various embodiments of the disclosure may be included and provided in a computer program product. The computer program products may be traded as commodities between sellers and buyers. The computer program product may be distributed in the form of a machine-readable storage medium (e.g., compact disc read only memory (CD-ROM)), or be distributed (e.g., downloaded or uploaded) online via an application store (e.g., Play Store^{™}), or between two user devices (e.g., smartphones) directly. If distributed online, at least part of the computer program product may be temporarily generated or at least temporarily stored in the machine-readable storage medium, such as memory of the manufacturer's server, a server of the application store, or a relay server.

According to various embodiments, each component (e.g., a module or a program) of the above-described components may include a single entity or multiple entities. Some of the plurality of entities may be separately disposed in different components. According to various embodiments, one or more of the above-described components may be omitted, or one or more other components may be added. Alternatively or additionally, a plurality of components (e.g., modules or programs) may be integrated into a single component. In such a case, according to various embodiments, the integrated component may still perform one or more functions of each of the plurality of components in the same or similar manner as they are performed by a corresponding one of the plurality of components before the integration. According to various embodiments, operations performed by the module, the program, or another component may be carried out sequentially, in parallel, repeatedly, or heuristically, or one or more of the operations may be executed in a different order or omitted, or one or more other operations may be added.

## Claims

1. An electronic device (201), comprising:
a slidable display (260); and
a processor (220) configured to:
display a screen including content on the slidable display;
identify an event for automatically extending or contracting the slidable display by a designated size, the designated size being determined based on the event;
display an object for indicating a progress degree of extending or contracting the slidable display on the slidable display based on the event, a size of the object being determined based on the designated size; and
apply a visual effect indicating the progress degree to the object while extending or contracting the slidable display by the designated size.

2. The electronic device of claim 1, wherein the processor is configured to apply the visual effect to allow a color or blur effect corresponding to the progress degree to overlap the object.

3. The electronic device of claim 1 or 2, wherein the processor is configured to apply the visual effect to increase or decrease an area where the color or blur effect is displayed over the object according to the progress degree.

4. The electronic device of any one of claims 1 to 3, wherein the processor is configured to apply the visual effect to increase or decrease a brightness of the color or blur effect over the object according to the progress degree.

5. The electronic device of any one of claims 1 to 4, wherein the processor is configured to display information about a remaining time on the slidable display until the extension or the contraction is completed based on the progress degree.

6. The electronic device of any one of claims 1 to 5, wherein the processor is configured to display information indicating a progress rate for the extension or the contraction on the slidable display based on the progress degree.

7. The electronic device of any one of claims 1 to 6, wherein the processor is configured to:
identify the designated size corresponding to the event based on identifying the event; and
determine at least one of a shape or a form of the object based on a direction of the extension or the contraction of the slidable display.

8. The electronic device of any one of claims 1 to 7, wherein the processor is configured to determine a size of the object based on a size of a display area of the slidable display when the extension or the contraction of the slidable display is completed.

9. The electronic device of any one of claims 1 to 8, wherein the processor is configured to decrease a size or a length of the object according to the progress degree.

10. The electronic device of any one of claims 1 to 9, wherein the processor is configured to apply a masking effect or a blur effect to the screen displayed on the slidable display according to the progress degree.

11. A method for operating an electronic device (201), the method comprising:
displaying a screen including content on a slidable display (260) included in the electronic device;
identifying an event for automatically extending or contracting the slidable display by a designated size, the designated size being determined based on the event;
displaying an object for indicating a progress degree of extending or contracting the slidable display on the slidable display based on the event, a size of the object being determined based on the designated size; and
applying a visual effect indicating the progress degree to the object while extending or contracting the slidable display by the designated size.

12. The method of claim 11, wherein applying the visual effect to the object includes applying the visual effect to allow a color or blur effect corresponding to the progress degree to overlap the object.

13. The method of claim 11 or 12, wherein applying the visual effect to the object includes applying the visual effect to increase or decrease an area where the color or blur effect is displayed over the object according to the progress degree.

14. The method of any one of claims 11 to 13, further comprising applying a masking effect or a blur effect to the screen displayed on the slidable display according to the progress degree.

15. The method of any one of claims 11 to 14, further comprising displaying information about a remaining time on the slidable display until the extension or the contraction is completed based on the progress degree.
